# EUROPÄISCHE PATENTSCHRIFT

(11) **EP 3 662 122 B1**
(45) Veröffentlichungstag und Bekanntmachung des Hinweises auf die Patenterteilung: **28.09.2022**
(21) Anmeldenummer: 18750402.2
(22) Anmeldetag: 01.08.2018
(51) Int. Cl.: E04H 12/12, E04H 12/16, E02D 27/42

(54) **FUNDAMENT FÜR EIN BAUWERK**
FOUNDATION FOR A BUILDING
FONDATION D'UN BÂTIMENT

(30) Priorität: 01.08.2017 DE 102017117440; 06.09.2017 DE 102017120526; 28.03.2018 DE 102018107421
(43) Veröffentlichungstag der Anmeldung: 10.06.2020
(73) Patentinhaber: Max Bögl Wind AG, 92369 Sengenthal (DE)
(72) Erfinder: BETZ, Thorsten, 92318 Neumarkt (DE); REITENSPIESS, Michael, 90518 Altdorf (DE)
(74) Vertreter: Canzler & Bergmeier Patentanwälte Partnerschaft mbB
(86) Internationale Anmeldenummer: PCT/EP2018/070900
(87) Internationale Veröffentlichungsnummer: WO 2019/025505

(56) Entgegenhaltungen:
- WO-A1-2016/112376
- CN-U- 203 924 104
- DE-A1-102009 016 892
- DE-A1-102013 105 512
- DE-A1-102013 108 692
- DE-U1-202010 007 750
- US-A1- 2014 250 806

## Beschreibung

Die vorliegende Erfindung betrifft einen vorgespannten Behälter oder Windkraftturm, welcher mittels einer Vielzahl von Spanngliedern vorgespannt ist und welcher ein Fundament aufweist, an welchem die Vielzahl von Spanngliedern verankert ist, sowie wenigstens ein Ankerelement, an welchem wenigstens ein Spannglied der Vielzahl von Spanngliedern verankert ist.

Vorgespannte Bauwerke wie Türme oder Behälter sowie Fundamente für diese Bauwerke sind in einer Vielzahl von verschiedenen Ausführungen bekannt geworden. Beispielsweise ist es bei Windkrafttürmen bekannt, Stahltürme aus einzelnen Stahlrohrschüssen zusammenzusetzen, wobei die einzelnen Stahlrohrschüsse an ihren Flanschen miteinander verschraubt werden. In die Fundamente solcher Türme sind massive Ankerkörbe mit Ankerhülsen für die Aufnahme von Ankerbolzen eingegossen, die über das Fundament hinausragen und an denen dann der jeweils unterste Stahlrohrschuss befestigt werden kann. Ein solches Fundament ist beispielsweise aus der DE 10 2009 016 892 A1 bekannt. Eine ähnliche Fundamentausführung ist weiterhin aus der CN 203924104 U bekannt.

Die DE 20 2010 007 750 U1 zeigt neben der WO 2016/112376 A1 ebenfalls ein Fundament für einen Stahlturm. Dieses ist mit einer zusätzlichen Betonschicht ertüchtigt. Die Ertüchtigungsschicht ist mit dem ursprünglichen Fundament mittels mehrerer vorgespannter Ankerstangen verbunden.

Weiterhin sind Betontürme sowie Hybridtürme für Windkraftanlagen bekannt. Beispielsweise werden derartige Türme aus ringförmigen oder ringsegmentförmigen Betonfertigteilen aufgebaut, welche übereinander angeordnet werden und durch Spannglieder vorgespannt werden. Die ringförmigen oder ringsegmentförmigen Betonfertigteile können dabei kreisringförmig oder polygonzugartig ausgeführt sein.

Die US 2014/0250806 A1 zeigt einen Turm, bei dem die Spannglieder dabei einzeln mit einer Pfahlgründung im Baugrund verankert sind. Nach einer Ausführung können die Pfähle auch in eine ringförmige Fundamentplatte mit eingegossen sein.

Bei einer anderen Art der Verankerung werden die Spannglieder mit ihrem einen Ende am oberen Ende des Betonturms oder auch an einem der Betonfertigteile in einem mittleren Bereich verankert und mit ihrem anderen Ende bis zum Fundament geführt und dort verankert. Um die Spannglieder im Fundament zu verankern, so dass die Vorspannkraft eingeleitet werden kann, wird auf der Unterseite des Fundaments eine größere Ausnehmung der so genannte Spannkeller, vorgesehen. Dieser wird genutzt, um die Vorspannung mit Spannpressen aufzubringen. Das Fundament beinhaltet hierdurch z. B. eine Art ringförmige Konsole, durch welche die Spannglieder hindurchgeführt werden und unterhalb welcher sie im Spannkeller verankert werden. Ein derartiges Fundament ist beispielsweise aus der EP 1 262 614 B2, der DE 10 2013 105 512 A1, der DE 10 2013 108 692 A1 oder der DE 10 2015 219 655 A1 bekannt. Das Fundament muss aufgrund des Spannkellers und der Konsole vergleichsweise massiv ausgeführt werden und mit einer starken Bewehrung versehen werden, um die Lasteinleitung durch die Spanngliedern und die Lastweitereinleitung über die Konsole in die eigentliche Fundamentplatte zu ermöglichen.

Aufgabe der vorliegenden Erfindung ist es, ein Fundament vorzuschlagen, das einfach hergestellt werden kann und dennoch eine günstige Lasteinleitung ermöglicht. Weiterhin soll ein entsprechendes Bauwerk vorgeschlagen werden.

Die Aufgabe wird gelöst mit den Merkmalen der unabhängigen Ansprüche.

Bei einem Bauwerk in Form eines Windkraftturms oder vorgespannten Behälters, welches mittels einer Vielzahl von Spanngliedern vorgespannt ist und welches ein Fundament, an welchem die Vielzahl von Spanngliedern verankert ist, sowie wenigstens ein mit dem Fundament verbundenes Ankerelement, an welchem wenigstens ein Spannglied der Vielzahl von Spanngliedern verankert ist, aufweist, ist vorgesehen, dass das Fundament wenigstens eine in das Fundament eingegossene Rückhängevorrichtung aufweist. Diese erstreckt sich bis an eine Oberseite des Fundaments oder darüber hinaus und ist mit dem Ankerelement verbunden. Die Rückhängevorrichtung umfasst eine in das Fundament eingegossene, untere Verankerung, insbesondere eine untere Ankerplatte, wobei die Verankerung innerhalb eines unteren Drittels einer Fundamentplatte des Fundaments eingegossen ist. Als Verankerung kommen neben Ankerplatten Hülsen, Dübel oder sonstige Anker in Frage. Dabei ist das wenigstens eine Ankerelement mit der wenigstens einen Rückhängevorrichtung verbunden. Ein Lasteinleitungsbereich des Fundaments, welcher sich oberhalb der unteren Verankerung bzw. Ankerplatte bis an die Oberseite des Fundaments erstreckt, ist mittels der Rückhängevorrichtung mit einer Vorspannung beaufschlagbar.

Bei einem Verfahren zur Herstellung eines mittels einer Vielzahl von Spanngliedern vorgespannten Bauwerks in Form eines vorgespannten Behälters oder Windkraftturms, bei welchem die Vielzahl von Spanngliedern mittels wenigstens eines Ankerelements an dem Fundament verankert wird, wird entsprechend wenigstens eine derartige Rückhängevorrichtung in das Fundament eingegossen. Das wenigstens eine Ankerelement wird mit der Rückhängevorrichtung verbunden und das Fundament mittels der Rückhängevorrichtung mit einer Vorspannung beaufschlagt.

Unter einer Rückhängevorrichtung wird dabei im Rahmen der vorliegenden Anmeldung eine Konstruktion verstanden, welche zusätzlich zu einem Ankerelement zur Befestigung von angrenzenden Komponenten in der Umgebung dieses Ankerelements in ein Bauteil eingegossen ist und welche die über das Ankerelement eingeleiteten Kräfte in tiefere lastabtragende Betonschichten ableitet und dort verteilt. Ein Ausbrechen des Betons im Bereich der Verankerung des Ankerelements wird hierdurch verhindert.

Das Bauwerk in Form eines vorgespannten Behälters oder Windkraftturms weist dabei einen auf dem Fundament angeordneten, beispielsweise rohrförmigen oder kreisförmigen, Abschnitt vorzugsweise aus Beton auf und kann sowohl als Ortbetonbauwerk ausgeführt sein oder nach einer bevorzugten Ausführung der Erfindung aus Betonfertigteilen aufgebaut sein. Vorzugsweise ist das Bauwerk in Form eines vorgespannten Behälters oder Windkraftturms aus ringförmigen oder ringsegmentförmigen Betonfertigteilen aufgebaut, die mittels der Spannglieder miteinander und mit dem Fundament verspannt sind.

Gemäß der vorliegenden Erfindung wird die Rückhängevorrichtung nun nicht nur bis in tiefere Betonschichten geführt, sondern erstreckt sich mindestens bis in das untere Drittel einer Fundamentplatte des Fundaments, vorzugsweise bis zu einer Unterseite des Fundaments bzw. der Fundamentplatte des Fundaments. Mittels der Rückhängevorrichtung ist es nun möglich, die Kräfte aus der Vorspannung der Spannglieder über die eingegossene, untere Verankerung, insbesondere eine untere Ankerplatte, im unteren Drittel der Fundamentplatte, vorzugsweise direkt auf der Unterseite der Fundamentplatte, einzubringen, so dass nicht nur eine obere Schicht, sondern wenigstens zwei Drittel der Höhe der Fundamentplatte, vorzugsweise die gesamte Höhe der Fundamentplatte, zur Aufnahme der Last genutzt werden kann. Die Krafteinleitung in die Fundamentplatte erfolgt dabei, anders als bei der Konsole des Standes der Technik, ohne einen Hebelarm direkt unterhalb der Spannglieder, so dass wesentlich geringere Zugbelastungen in dem Fundament auftreten. Das Fundament kann hierdurch kleiner und mit vereinfachter Konstruktion, insbesondere auch ohne den aufwendigen Spannkeller, ausgeführt werden. Ebenso kann die Bewehrungsmenge in dem Fundament hierdurch deutlich reduziert werden und die Bewehrungen können einfacher und schneller eingebaut werden. Weiterhin ist es dabei vorteilhaft, dass die Spannglieder nun nicht mehr wie bisher im Spannkeller unterhalb des Fundaments bzw. unterhalb der Konsole verankert werden, sondern auf der Oberseite des Fundaments, wo ein Zugang wesentlich einfacher möglich ist. Die Montage und Wartung des Turmes ist daher erleichtert.

Vorteilhaft bei dem Bauwerk in Form eines vorgespannten Behälters oder Windkraftturms ist es weiterhin, wenn die Spannglieder derart vorgespannt sind bzw. bei dem Verfahren derart vorgespannt werden, dass ein Lasteinleitungsbereich des Fundaments zumindest im Lastfall des planmäßigen Betriebszustands bzw. des Regelbetriebs stets überdrückt ist, d.h. der Beton ist zumindest im Lasteinleitungsbereich derart vorgespannt, dass im planmäßigen Betriebszustand keine Zugbeanspruchungen auftreten. Somit wird mittels der Spannglieder nicht nur das auf dem Fundament angeordnete Bauwerk, beispielsweise übereinander angeordnete Betonfertigteile des Bauwerks, sondern zugleich auch das Fundament selbst mit einer Vorspannung versehen. Aufgrund der Vorspannung kann das Fundament noch kompakter ausgeführt werden. Ein wesentlicher Vorteil des vorgespannten Fundaments ist es auch, dass hierdurch eine wesentlich widerstandsfähigere Konstruktion in Bezug auf Ermüdung erreicht wird. So kam es im Stand der Technik unter Zugbeanspruchung oftmals zu Horizontalrissen im Fundament, welche unter wechselnder Last arbeiten, d.h. ständig auf und zu gehen, und sich somit weiter ausbreiten ("Pumpeffekt"). Dem kann nun durch das im planmäßigen Betriebszustand bzw. regulären Betrieb überdrückte Fundament entgegen gewirkt werden. Die Spannglieder werden dabei vorzugsweise mittels einer Spannzange vorgespannt.

Die Rückhängevorrichtung ist zum Verbinden mit den Spanngliedern vorzugsweise oberhalb des Fundaments mit dem Ankerelement verbunden, an welchem ein Spannanker wenigstens eines Spannglieds der Vielzahl von Spanngliedern verankert ist. Das Ankerelement kann dabei fest mit der Rückhängevorrichtung verbunden sein, beispielsweise durch Verschweißen, oder auch einteilig mit dieser ausgeführt sein. Ebenso ist es jedoch auch möglich, dass das Ankerelement lösbar und oder verstellbar mit der Rückhängevorrichtung verbunden ist.

Daneben ist es bei dem Bauwerk in Form eines vorgespannten Behälters oder Windkraftturms vorteilhaft, wenn die Spannglieder als externe Spannglieder außerhalb einer Wandung des Bauwerks geführt sind. Ist das Bauwerk aus Betonfertigteilen aufgebaut, so können diese hierdurch einfacher ausgeführt werden, da keine Spannkanäle vorgesehen werden müssen. Ebenso ist es bei einem Bauwerk aus Ortbeton nicht erforderlich, Spannkanäle vorzusehen. Auch das Spannen und die spätere jederzeitige Wartung der Spannglieder ist erleichtert, da diese als externe Spannglieder wesentlich einfacher zugänglich sind.

Bei dem Bauwerk in Form eines vorgespannten Behälters oder Windkraftturms ist es weiterhin vorteilhaft, wenn die Fundamentplatte des Fundaments als geschlossene Fundamentplatte ohne Innenraum ausgeführt ist. Da ein Spannkeller zur Verankerung der Spannglieder bei dem vorgeschlagenen Fundament nicht benötigt wird, ist die Herstellung des Fundaments hierdurch vereinfacht. Es muss weder eine Schalung für einen Innenraum vorgesehen werden, noch ist es erforderlich, die Bewehrungsführung an einen solchen Innenraum anzupassen. Vielmehr kann die Fundamentplatte in einfacher Weise durchgängig betoniert werden. Vorteilhafter dabei ist es auch, dass auch die Bewehrung in Form von rechteckigen Bewehrungsmatten durchgängig und mit orthogonal zueinander orientierten Bewehrungseisen verlegt werden kann und nicht wie im Stand der Technik um den Innenraum herum radial und umlaufend verlegt werden muss.

Vorzugsweise ist dabei auf der Oberseite der geschlossenen Fundamentplatte wenigstens eine Aussparung, vorzugsweise eine zylindrische Aussparung, vorgesehen. Diese erstreckt sich von der Oberseite der geschlossenen Fundamentplatte durch einen Teil der Fundamenthöhe und kann hierdurch als Verlängerung eines in das Fundament eingegossenen Leerrohrs dienen. Vorzugsweise ist die Aussparung mit einer Abdeckung abgedeckt.

Ebenfalls vorteilhaft bei dem Bauwerk in Form eines vorgespannten Behälters oder Windkraftturms ist es, wenn die Rückhängevorrichtung zur Verbindung der unteren Ankerplatte mit dem Ankerelement wenigstens ein Längselement, vorzugsweise eine Ankerstange, umfasst. Das wenigstens eine Längselement ist dabei zumindest mit der unteren Ankerplatte fest verbunden und dient der gleichmäßigen Übertragung der Kräfte der Spannglieder von dem Ankerelement auf die untere Ankerplatte. Vorzugsweise sind wenigstens zwei Längselemente vorgesehen, da hierdurch die Kräfte besonders gleichmäßig auf die untere Verankerung übertragen werden können. Das oder die Längselemente können beispielsweise als seilartige Verbindungen, Drähte, Litzen, Stahlrohre, Stahlplatten, Ankerstangen, Carbonstangen oder -platten und dgl. ausgebildet sein. Vorteilhaft ist es, wenn die wenigstens zwei Längselemente als Ankerstangen ausgebildet sind, da diese kostengünstig und in verschiedenen Abmessungen zur Verfügung stehen.

Vorteilhaft ist es, wenn das Ankerelement mit der Rückhängevorrichtung verbunden ist und somit Bestandteil der Rückhängevorrichtung ist. Das Ankerelement bildet hierdurch eine Aufnahme für einen Spannanker eines Spannglieds der Vielzahl von Spanngliedern.

Besonders vorteilhaft ist es, wenn das Ankerelement als eine oberhalb des Fundaments angeordnete, obere Ankerplatte ausgebildet ist.

Dabei kann nach einer ersten Ausführung vorgesehen sein, dass das Ankerelement fest mit der Rückhängevorrichtung, insbesondere dem wenigstens einen Längselement der Rückhängevorrichtung, verbunden ist und/oder einteilig mit dieser ausgeführt ist. Die Rückhängevorrichtung bildet in diesem Fall eine Art festen Rahmen.

Nach einer anderen Ausführung ist es jedoch ebenso vorteilhaft, wenn das Ankerelement verstellbar mit dem wenigstens einen Längselement der Rückhängevorrichtung verbunden ist oder verbindbar ist. Vorteilhaft ist es dabei, wenn die Rückhängevorrichtung wenigstens zwei Ankerstangen umfasst, grundsätzlich ist jedoch eine verstellbare Verbindung des Ankerelements auch mit nur einem Längselement denkbar. Durch Verstellen des Ankerelements in Bezug auf die Höhe der Längselemente ist es möglich, die Längselemente und damit auch das Fundament vorzuspannen und dabei zugleich auch die Spannglieder zu spannen. Es ist hierdurch auch möglich, einfache und kostengünstige Spannglieder mit zwei Festankern zu verwenden. Vorteilhaft dabei ist es auch, dass hierzu gleichzeitig mehrere und kleinere Spannpressen oberhalb der oberen Ankerelemente angesetzt werden, wo ein einfacherer Zugang möglich ist.

Vorteilhaft ist es weiterhin, wenn das Längselement der Rückhängevorrichtung von einer Hülle aus einem reibungsmindernden Material umgeben ist. Die Längselemente werden hierdurch im Kontakt mit der Fundamentplatte statisch entkoppelt, so dass die Kraft aus den Spanngliedern über die Längselemente gezielt an die untere Verankerung und von dort in die Fundamentplatte eingeleitet werden kann.

Nach einer weiteren Ausführung der Erfindung ist eine Vielzahl von Rückhängevorrichtungen in das Fundament eingegossen, wobei vorzugsweise jede der Rückhängevorrichtungen mit jeweils einem Ankerelement verbindbar ist oder verbunden ist. Somit ist jedem Spannglied eine eigene Rückhängevorrichtung zugeordnet, mit der es mittels jeweils eines Ankerelements verbunden werden kann. Die Handhabung der Rückhängevorrichtungen bei der Herstellung des Fundaments sowie das Spannen der Spannglieder ist hierdurch erleichtert. Natürlich ist es aber auch denkbar, ein Ankerelement vorzusehen, an dem mehrere Spannglieder beispielsweise nebeneinander verankert werden können.

Weiterhin ist es vorteilhaft, wenn die Rückhängevorrichtungen jeweils wenigstens zwei Längselemente, insbesondere zwei Ankerstangen, umfassen und vorzugsweise die zwei Längselemente in radialer Richtung des Fundaments hintereinander liegend angeordnet sind. Unter der radialen Richtung werden dabei, sofern das Fundament nicht rund ausgeführt ist, alle von einem Mittelpunkt des Fundaments strahlenförmig nach außen verlaufenden Richtungen verstanden. Die radial hintereinander liegende Anordnung verbessert die Zugänglichkeit der Rückhängevorrichtungen für das Ansetzen der Spannpressen und ermöglicht zugleich eine platzsparende Anordnung der Rückhängevorrichtungen. Eine solche radiale Anordnung der Rückhängevorrichtungen bzw. Ankerstangen bietet auch die Möglichkeit, zwei Spannpressen jeweils um 90° zu den Ankerstangen bzw. Längselementen versetzt, also weitgehend in Umfangsrichtung des Fundaments nebeneinander liegend, anzuordnen. Hierdurch kann eine sehr kompakte Ausführung der oberen Ankerplatte realisiert werden.

Natürlich wäre es alternativ auch denkbar, die Längselemente der Rückhängevorrichtungen in Umfangsrichtung des Fundaments nebeneinander liegend anzuordnen und die Spannpressen dann wiederum orthogonal zu den Längselementen, also nun radial hintereinander liegend, anzuordnen. Bei dem Verfahren zur Herstellung des Bauwerks bzw. des Fundaments ist es vorteilhaft, wenn die Rückhängevorrichtungen mit jeweils zwei Längselementen und jeweils einer gemeinsamen unteren Ankerplatte vormontiert werden und als Vormontageumfang in der Schalung platziert werden. Dies ermöglicht eine kostengünstige und ausführungssichere Herstellung und zielsichere Umsetzung des Korrosionsschutzes der Rückhängevorrichtungen und erleichtert zugleich auf der Baustelle die Anordnung der Rückhängevorrichtungen in der Schalung.

Werden Rückhängevorrichtungen mit mehreren Längselementen bzw. Ankerstangen eingesetzt, so ist es zum Spannen der Spannglieder vorteilhaft, die Spannpressen nicht in einer Flucht mit den zwei oder mehr Längselementen anzusetzen, sondern versetzt dazu. Hierdurch können die Längselemente bzw. die Rückhängevorrichtungen und die Spannpressen auf sehr kleinem Raum untergebracht werden, so dass die Zugänglichkeit der Rückhängevorrichtungen verbessert wird und die Ankerplatten sehr kompakt ausgeführt werden können. Wie bereits ausgeführt, ist es vorteilhaft, bei einer Rückhängevorrichtung mit zwei Längselementen die Spannpressen orthogonal zu den Längselementen anzuordnen. Beinhaltet die Rückhängevorrichtung mehrere Längselemente, so ist es vorteilhaft, die Spannpressen zumindest teilweise auch zwischen den Längselementen anzusetzen, um eine kompakte Anordnung zu erreichen.

Um die Rückhängevorrichtungen lagerichtig in der Schalung zu positionieren, ist es vorteilhaft, wenn zunächst eine Lehre als Positioniervorrichtung für die Einrichtung der Rückhängevorrichtungen auf einer Sauberkeitsschicht und/oder in einer Schalung des Fundaments platziert wird und anschließend die Rückhängevorrichtungen mittels der Lehre lagerichtig in Bezug auf das zu gießende Fundament platziert werden. Die Lehre ermöglicht dabei vorzugsweise die Positionierung mehrerer Rückhängevorrichtungen, vorzugsweise sämtlicher Rückhängevorrichtungen, die in dem Fundament eingegossen werden sollen. Eine solche Lehre ist nicht nur in Verbindung mit den beschriebenen Rückhängevorrichtungen vorteilhaft, sondern kann auch zur Positionierung anderer Ankerelemente, von Hüllrohren oder sonstigen Elementen dienen und hat daher selbständig erfinderische Bedeutung.

Nach einer vorteilhaften Ausführung umfasst die Lehre wenigstens einen vorzugsweise ringförmigen Rahmen, wobei vorzugsweise eine Vielzahl von Anschlägen und/oder Positionierschablonen für die Positionierung der Rückhängevorrichtungen, insbesondere der vormontierten Rückhängevorrichtungen, an einem Außen- und/oder Innenumfang des Rahmens angeordnet sind. Die Anschläge sind dabei im einfachsten Fall durch halbkreisförmige Ausschnitte am Innen- und/oder am Außenumgang des Rahmens ausgebildet. Zum Positionieren der Rückhängevorrichtungen können die Längselemente der Rückhängevorrichtungen in den halbkreisförmigen Ausschnitten aufgenommen werden. Allerdings können bei dieser Ausführung die Längselemente nur einzeln positioniert werden.

Um auch die bereits beschriebenen vormontierten Rückhängevorrichtungen mit jeweils zwei Längselementen positionieren zu können, ist es vorteilhaft, wenn eine Vielzahl von Positionierschablonen am Außen- und/oder Innenumfang des Rahmens angeordnet sind. Die Positionierschablonen umfassen jeweils zwei Anschläge für zwei Längselemente der vormontierten Rückhängevorrichtungen. Die Positionierschablonen sind vorzugsweise radial nach außen weisend an dem Rahmen angeordnet und können nach einer ersten Ausführung starr an dem Rahmen befestigt sein. Nach einer anderen vorteilhaften Ausbildung sind die Positionierschablonen lösbar an dem Rahmen angeordnet, um das Entfernen der Lehre nach der Betonage zu ermöglichen, da die nach innen geneigten Rückhängevorrichtungen andernfalls kollidieren.

Nach einer anderen, bevorzugten Ausführung sind die Anschläge klappbar und/oder verschiebbar an den Positionierschablonen und/oder an dem Rahmen angeordnet. Somit können sowohl die Anschläge jeweils einzeln klappbar oder verschiebbar an den die Positionierschablonen angeordnet sein oder es können durch eine klappbare oder verschiebbare Anordnung der Positionierschablonen an dem Rahmen jeweils zwei Anschläge gemeinsam gegenüber dem Rahmen bewegt werden. Auch diese Ausführung ermöglicht das einfache Entfernen der Lehre nach der Betonage, idealerweise vom bereits betonierten Fundament aus, d.h. ohne zusätzliche Erfordernis eines besonderen Zugangs zu den Anschlägen.

Nach einer anderen Ausführung ist es hingegen vorteilhaft, wenn die untere Verankerung bzw. die untere Ankerplatte und/oder die obere Ankerplatte ringförmig ausgebildet ist und sich vorzugsweise über den gesamten Umfang des Fundaments erstreckt. Ist die untere Ankerplatte ringförmig ausgebildet, so kann diese mit einer Vielzahl von Längselementen zu einer einzigen Rückhängevorrichtung verbunden sein, die im Ganzen in das Fundament eingegossen werden kann. Die Rückhängevorrichtung kann dann wie zuvor beschrieben mit einer Vielzahl von oberen Ankerplatten verbunden werden, an welches jeweils ein Spannglied verankert ist. Alternativ kann jedoch auch die obere Ankerplatte als ringförmige Ankerplatte vorgesehen werden, an welcher dann sämtliche Spannglieder verankert werden können. Die ringförmige Ausführung der unteren und oberen Ankerplatte kann Vorteile im Hinblick auf die Montage bei der Einrichtung bzw. Justage der Rückhängevorrichtung bieten.

Daneben ist es vorteilhaft, wenn das Fundament eine Bewehrung aus mehreren einzelnen, übereinander in dem Fundament angeordneten und vorzugsweise vorgefertigten Betonstahlmatten aufweist. Aufgrund dessen, dass die Vorspannkräfte nun über die Rückhängevorrichtung in einem unteren Drittel der Fundamentplatte, vorzugsweise direkt auf der Unterseite der Fundamentplatte, eingeleitet werden und das Fundament keine Spannkonsole mehr aufweist, sind nun keine aufwändig geformten Bewehrungen mehr erforderlich, welche von Hand verlegt werden müssen. Es ist vielmehr ausreichend, einzelne flache Bewehrungsmatten mit vorzugsweise rechteckiger Grundform einzusetzen. Diese können einfach vorgefertigt und gehandhabt werden. Aufgrund der wesentlich vereinfachten Bewehrung mit einzelnen Betonstahlmatten ist es auch möglich, die Bewehrung parallel bzw. gleichzeitig in verschiedenen Bereichen der Schalung einzubringen, da, anders als bei den bisher üblichen, komplex geformten Bewehrungen, keine bestimmte Reihenfolge eingehalten werden muss. Ebenso ist es daher auch möglich, die Rückhängevorrichtungen und die Bewehrungen zumindest teilweise zeitlich parallel zueinander einzubringen. Die Errichtung des Bauwerks kann hierdurch schneller erfolgen.

Vorzugsweise sind dabei die Betonstahlmatten derart in dem Fundament verlegt, dass ihre Bewehrungseisen orthogonal zueinander verlaufen. Beispielsweise können einzelne Betonstahlmatten mit parallel zueinander ausgerichteten Bewehrungseisen eingesetzt werden, die dann kreuzweise zueinander in dem Fundament verlegt werden, so dass die Bewehrungseisen der mehreren Betonstahlmatten insgesamt orthogonal zueinander verlegt sind.

Eine besonders einfache Ausführung des Fundaments ergibt sich, wenn das Fundament bzw. die Fundamentplatte einen im Wesentlichen rechteckigen Querschnitt aufweist. Die Anordnung der Bewehrungen ist hierdurch nochmals vereinfacht, da eine Vielzahl gleichartiger Bewehrungsmatten vorgefertigt und in die Schalung eingelegt werden kann. Unterschiedliche Durchmesser bzw. Längen der Bewehrungsmatten, wie sie bei einem Querschnitt mit einem trapezförmig abfallenden Bereich erforderlich sind, sind hierdurch nicht nötig. Zudem wird hierdurch ein vorteilhaft höheres Gewicht des Fundaments als bei einem zur Außenseite hin abfallenden Fundament erreicht. Der Querschnitt bezieht sich dabei auf eine Schnittrichtung von der Unterseite zur Oberseite des Fundaments bzw. durch die Hochachse des Fundaments. Anders ausgedrückt ergibt sich der Querschnitt aus einer Schnittfläche, die vom Mittelpunkt radial nach außen orientiert ist.

Nach einer anderen Weiterbildung der Erfindung ist es vorteilhaft, wenn das Fundament wenigstens ein Leerrohr für die Zuführung von Leitungen aufweist, wobei vorzugsweise das Leerrohr von einer Außenseite des Fundaments bis in einen Innenraum des Fundaments oder bis an die Oberseite verläuft. Aufgrund der stark reduzierten und vereinfachten Bewehrung ist es bei dem vorgeschlagenen Fundament möglich, die Leerrohre im Fundament seitlich zuzuführen. Demgegenüber sind bei einem Fundament mit einem Spannkeller umfangreiche Bewehrungen erforderlich, welche das Zuführen von Leerrohren von der Seite her stark einschränken bzw. sogar verhindern und einen Leerrohrgraben unter dem Fundament erfordern. Bei dem vorgeschlagenen Fundament wird hingegen kein Leerrohrgraben mehr benötigt, so dass wesentlich weniger umfangreiche Erdarbeiten erforderlich sind als bei einem Fundamentmit einem Spannkeller.

Weiterhin ist es vorteilhaft, wenn das Fundament an seiner Oberseite einen vorzugsweise ringförmigen Ansatz aufweist. Der Ansatz könnte jedoch ebenso kreisförmig ausgeführt sein. Der Ansatz weist dabei einen vorzugsweise rechteckigen Querschnitt auf und ist in einem inneren, von der Außenseite des Fundaments beabstandeten, Bereich des Fundaments und auf der Oberseite der eigentlichen Fundamentplatte vorgesehen. Ein solcher ringförmiger Ansatz kann in vorteilhafter Weise sowohl dazu dienen, die Segmente, insbesondere die Betonfertigteile des Bauwerks aufzunehmen. Zudem ist es möglich, in dem außen an den ringförmigen Ansatz angrenzenden Bereich eine Erdanschüttung vorzunehmen, um das Fundament zu stabilisieren. Hierdurch erhält das Fundament trotz der schlanken Konstruktion mit einem vergleichsweise geringen Gewicht die für den Betrieb beispielsweise einer Windkraftanlage erforderliche Stabilität. Vorzugsweise weist der Ansatz eine höhere Betongüte als die Fundamentplatte auf. Beispielsweise ist der Ansatz aus einem Beton bis zu einer Festigkeitsklasse von C60/75 oder höher ausgeführt. Der Ansatz ist hierdurch besonders gut für die Aufnahme der aus dem vorgespannten Bauwerk eingeleiteten Kräfte geeignet.

Nach einer anderen Weiterbildung des Bauwerks in Form eines vorgespannten Behälters oder Windkraftturms ist es vorteilhaft, wenn das Fundament an seiner Oberseite eine Vergussrinne aufweist und im Bereich der Vergussrinne wenigstens zwei, vorzugsweise wenigstens drei, Aufnahmeelemente, vorzugsweise Gewindehülsen, zur Aufnahme von Justierelementen, vorzugsweise Justierschrauben, in das Fundament eingegossen sind. Die Vergussrinne kann dabei direkt an einer Oberseite der Fundamentplatte vorgesehen sein oder auch an einem ringförmigen oder kreisförmigen Ansatz auf der eigentlichen Fundamentplatte.

Bei einem Bauwerk, das eine Mehrzahl von auf dem Fundament übereinander angeordneten, ringförmigen oder ringsegmentförmigen Betonfertigteilen aufweist, sind entsprechend zwischen einem oder mehreren untersten Betonfertigteil/-en und dem Fundament wenigstens zwei, vorzugsweise wenigstens drei, Justiereinrichtungen angeordnet. Diese dienen der Ausrichtung des oder der untersten Betonfertigteile und somit der Ausrichtung des Bauwerks in vertikaler Richtung auf dem Fundament.

Nach einer ersten Ausführung der Justiereinrichtung beinhaltet diese beispielsweise wie oben beschrieben in das Fundament eingegossene Gewindehülsen sowie Justierschrauben, welche in die in der Vergussrinne eingegossenen Gewindehülsen eingesetzt werden können. Die Justierschrauben können dabei einen vergrößerten Kopf aufweisen, so dass der unterste Betonring bzw. die untersten Betonfertigteile ohne Lastverteilring direkt auf den Kopf der Justierschrauben aufgelegt werden können. Die Montage der Justiereinrichtungen ist deswegen besonders vorteilhaft, weil der Ansatz im Gegensatz zur Fundamentplatte deutlich weniger bewehrt ist.

Nach einer anderen Ausführung beinhaltet die Justiereinrichtung jeweils wenigstens ein Justierelement, vorzugsweise wenigstens eine Justierschraube, und/oder eine Stellplatte mit wenigstens einem Aufnahmeelement für das wenigstens eine Justierelement. Derartige Justiereinrichtungen mit einer Stellplatte können lose in der Vergussrinne angeordnet werden und der unterste Betonring bzw. die unterste Betonfertigteile können ebenfalls ohne Lastverteilring direkt auf die Oberseite der Stellplatten aufgelegt werden.

Da derartige Justiereinrichtungen auch in anderen Bauwerken bzw. auch in Verbindung mit Fundamenten ohne die zuvor beschriebenen Rückhängevorrichtung eingesetzt werden können, haben ein Fundament bzw. ein Bauwerk mit einer solchen Rückhängevorrichtung sowie die Justiereinrichtung selbst auch selbständig erfinderische Bedeutung.

Weitere Vorteile der Erfindung werden anhand der nachfolgend dargestellten Ausführungsbeispiele beschrieben. Es zeigen:
- **Figur 1**: einen Windkraftturm mit einem Fundament mit einem Spannkeller gemäß dem Stand der Technik,
- **Figur 2**: einen Windkraftturm mit einem Fundament mit einer Rückhängevorrichtung nach einer ersten Ausführung,
- **Figur 3**: eine schematische Schnittdarstellung eines Fundaments für einen Turm, insbesondere einen Windkraftturm, nach einer weiteren Ausführung,
- **Figur 4**: eine schematische Schnittdarstellung eines Fundaments für einen Turm nach einer weiteren alternativen Ausführung,
- **Figur 5a**: eine Detaildarstellung einer Rückhängevorrichtung nach einer ersten Ausführung in einer schematischen Schnittdarstellung,
- **Figur 5b**: die Rückhängevorrichtung der Figur 5a in einer schematischen Seitenansicht,
- **Figur 6a**: eine Detaildarstellung einer Rückhängevorrichtung gemäß einer zweiten Ausführung,
- **Figur 6b**: die Rückhängevorrichtung der Figur 6a in einer schematischen Seitenansicht,
- **Figur 7**: eine Detaildarstellung einer Rückhängevorrichtung nach einer weiteren Ausführung,
- **Figur 8**: eine schematische Schnittdarstellung durch die Vergussrinne eines Fundaments mit einer Justiereinrichtung,
- **Figuren 9a, 9b und 9c**: Detailansichten einer Stellplatte einer Justiereinrichtung nach verschiedenen Ausführungen,
- **Figur 10**: eine schematische Schnittdarstellung durch die Vergussrinne eines Fundaments mit einer Justiereinrichtung nach einer weiteren Ausführung,
- **Figur 11**: eine schematische Draufsicht auf ein Fundament mit Justiereinrichtungen sowie auf dem Fundament angeordneten Betonfertigteilen,
- **Figur 12**: eine schematische Darstellung des Spannens der Spannglieder mittels Spannzangen,
- **Figur 13**: eine Detaildarstellung einer als Vormontageumfang ausgeführten Rückhängevorrichtung mit zwei Längselementen,
- **Figur 14**: eine Draufsicht auf eine Lehre zur Positionierung der Rückhängevorrichtungen,
- **Figur 15**: eine abgebrochene Detaildarstellung einer Lehre mit bewegbaren Anschlägen für die Positionierung der Rückhängevorrichtungen, sowie
- **Figur 16**: eine abgebrochene, teilweise geschnittene Darstellung einer Positioniervorrichtung mit auf einer Grundplatte angeordneten Hohlprofile 53.

Bei der nachfolgenden Beschreibung der Figuren werden für Merkmale und Bauteile, die in verschiedenen Figuren gezeigt sind, jedoch identisch oder zumindest vergleichbar sind, jeweils gleiche Bezugszeichen verwendet. Sofern ein Merkmal oder Bauteil bereits anhand einer Figur beschrieben wurde, wird daher bei den nachfolgenden Figuren nur noch auf die Unterschiede zu den bereits beschriebenen Figuren detailliert eingegangen.

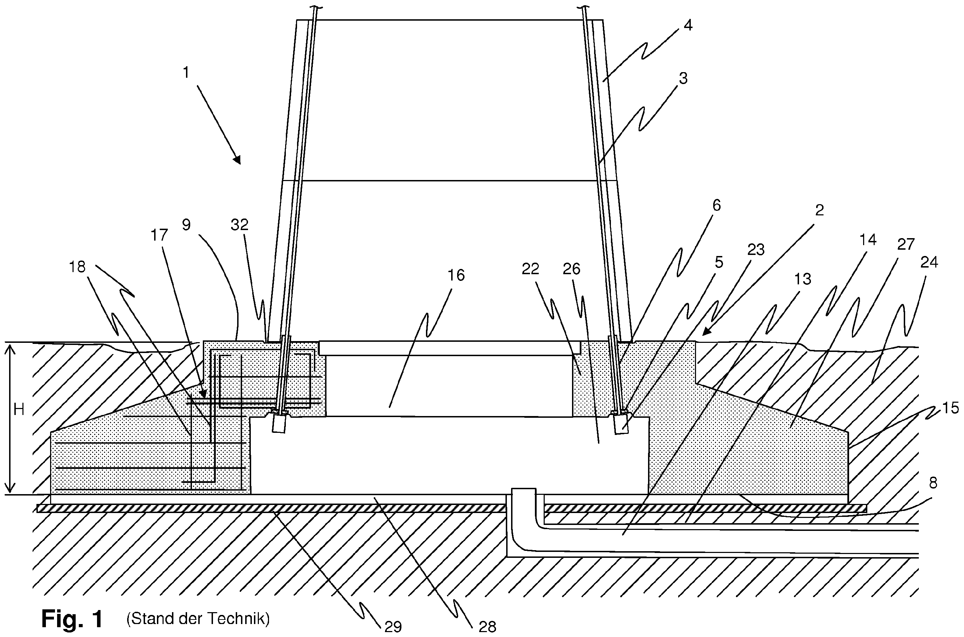

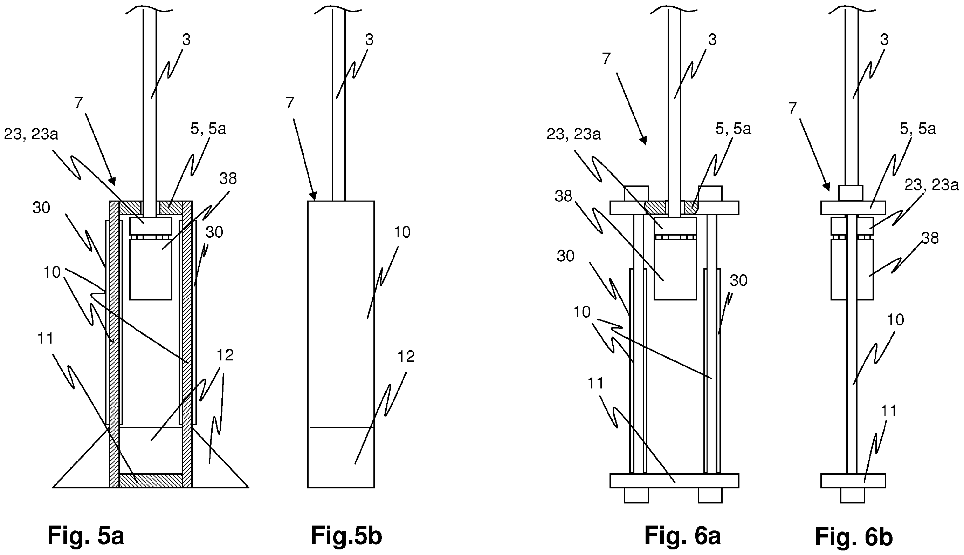

Figur 1 zeigt einen mittels einer Vielzahl von Spanngliedern 3 vorgespannten Turm 1 gemäß dem Stand der Technik. Der vorliegend gezeigte Turm 1 ist aus einer Vielzahl von Betonfertigteilen 4 aufgebaut, welche auf einem Fundament 2 übereinander angeordnet sind und mittels der Spannglieder 3 mit diesem verspannt sind. Um die Betonfertigteile 4 mit dem Fundament 2 zu verbinden, werden die Spannglieder 3 von einer hier nicht dargestellten oberen Verankerungsvorrichtung, beispielsweise einem oberen Betonfertigteil oder einem speziell für die Verankerung der Spannglieder ausgebildeten Spannstück, bis an das Fundament 2 geführt, wo sie ebenfalls mittels eines Ankers 23 verankert sind. Der Anker 23 wird dabei in bekannter Weise entweder im Bereich des Fundaments 2 oder im Bereich des Kopflagers, gegebenenfalls auch an beiden Enden des Spannglieds 3, als Spannanker 23a (siehe Figuren 5 und 6) ausgeführt, um das Spannen der Spannglieder 3 zu ermöglichen.

Das Fundament 2 beinhaltet die eigentliche Fundamentplatte 27, die vorliegend einen trapezförmigen Querschnitt bezogen auf eine Schnittrichtung von der Oberseite 9 zur Unterseite 8 des Fundaments 2 aufweist, sowie einen konsolenartigen Vorsprung 22. Im Innenraum 16 des Fundaments 2 ist ein Spannkeller 26 vorgesehen, in welchem sowohl eine Spannpresse (hier nicht dargestellt) angesetzt und die Spannglieder 3 gespannt werden können als auch die Spannanker 23 verankert werden können. Durch den Spannkeller 26 ergibt sich der konsolenartige Vorsprung 22, durch welchen die Spannglieder 3 hindurchgeführt und unterhalb des Vorsprungs 22 verankert werden können. In dem konsolenartigen Vorsprung 22 sind hierzu Hüllrohre 6 sowie unterseitig Ankerelemente 5, beispielsweise Ankerplatten eingegossen. Weiterhin sind noch die Oberseite 9, die Unterseite 8 und die Außenseite 15 des Fundaments 2 sowie der das Fundament 2 umgebende Boden 24 dargestellt.

Um die durch die Spannglieder 3 und die Betonfertigteile 4 eingebrachte Last von dem konsolenartigen Vorsprung 22 in die eigentliche Fundamentplatte 27 weiterzuleiten und Zugspannungen, welche aufgrund der exzentrischen Lasteinleitung auftreten, aufzunehmen, ist eine vergleichsweise massive Bewehrung 17 insbesondere in dem Übergangsbereich zwischen dem Vorsprung 22 und der Fundamentplatte 27 vorgesehen. Um eine belastungsgerechte Bewehrung 17 einbringen zu können, ist dabei eine Vielzahl zum Teil komplex geformter Bewehrungseisen 18 erforderlich, die oftmals einzeln in der Schalung platziert und fixiert werden müssen. Aufgrund der starken Bewehrung 17 des Fundaments 2 müssen daher Leerrohre 13 für Stromkabel und dgl. über einen Leerrohrgraben 14 unterhalb des Fundaments 2 zugeführt werden, was erhebliche Erdarbeiten bedingt. Um den Zugang zu dem Spannkeller 26 zu gewährleisten, müssen weiterhin Konstruktionen wie Treppen oder Leitern (hier nicht dargestellt) vorgesehen werden. Um das Eindringen von Wasser bzw. Feuchtigkeit in den Spannkeller 26 zu vermeiden, ist es weiterhin erforderlich, unterhalb des Fundaments 2 eine wasserdichte Bodenplatte 28 oberhalb einer Sauberkeitsschicht 29 vorzusehen.

Eine solche Fundamentkonstruktion nach dem Stand der Technik ermöglicht eine sichere Aufnahme der Spannglieder 3 in dem Fundament 2 sowie eine zuverlässige Lasteinleitung in die eigentliche Fundamentplatte 27, ist jedoch in der Herstellung vergleichsweise aufwändig und bedingt ein sehr massives Fundament mit einem entsprechend hohen Materialeinsatz.

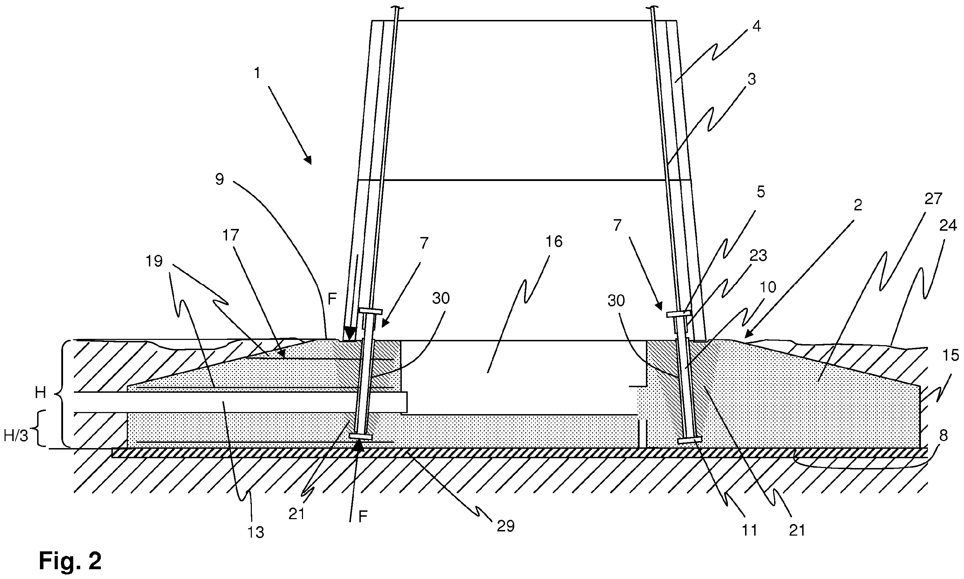

Figur 2 zeigt nun einen Turm 1 mit einem Fundament 2 gemäß der vorliegenden Erfindung. Auch hier ist der Turm 1 aus mehreren Betonfertigteilen 4 aufgebaut, welche mittels einer Vielzahl von Spanngliedern 3 vorgespannt und mit dem Fundament 2 verbunden sind. Grundsätzlich ist es jedoch auch möglich, einen solchen mittels Spanngliedern 3 verspannten Turm 1 aus Stahlsegmenten aufzubauen oder in Ortbeton herzustellen. Weiterhin verlaufen die Spannglieder 3 vorliegend außerhalb der Wandung der Betonfertigteile 4 als sogenannte externe Spannglieder. Es ist jedoch ebenso möglich, derartige Spannglieder 3 in Spannkanälen, welche innerhalb der Wandung der Betonfertigteile 4 vorgesehen sind, zu führen. Zur Verankerung der Spannglieder 3 ist dabei wiederum eine Vielzahl von Ankerelementen 5 vorgesehen, wobei an jeweils einem Ankerelement 5 wenigstens eines der Spannglieder 3 verankert ist.

In das Fundament 2 sind eine Vielzahl von Rückhängevorrichtungen 7 eingegossen. Die Spannglieder 3 werden nun nicht mehr durch das Fundament 2 hindurchgeführt, sondern mittels der Ankerelemente 5 an den in das Fundament 2 eingegossenen Rückhängevorrichtungen 7 verankert. Die Rückhängevorrichtungen 7 umfassen vorliegend jeweils eine an einer Unterseite 8 des Fundaments 2 eingegossene, untere Verankerung, die vorliegend als untere Ankerplatte 11 ausgebildet ist, und erstrecken sich bis an die Oberseite 9 des Fundaments 2 oder, wie vorliegend dargestellt, darüber hinaus. Das Ankerelement 5, welches beispielsweise als Ankerplatte 5a (siehe Figuren 5-7) ausgebildet ist, kann dabei Bestandteil der Rückhängevorrichtung 7 sein oder einteilig mit dieser ausgeführt sein. Ebenso kann das Ankerelement 5 jedoch auch ein separates Bauteil darstellen, welches erst nach Fertigstellung des Fundaments 2 mit der ihm zugeordneten Rückhängevorrichtung 7 verbunden wird. Die Ankerelemente 5 bilden dabei eine Aufnahme für jeweils wenigstens einen Anker 23 wenigstens eines Spannglieds.

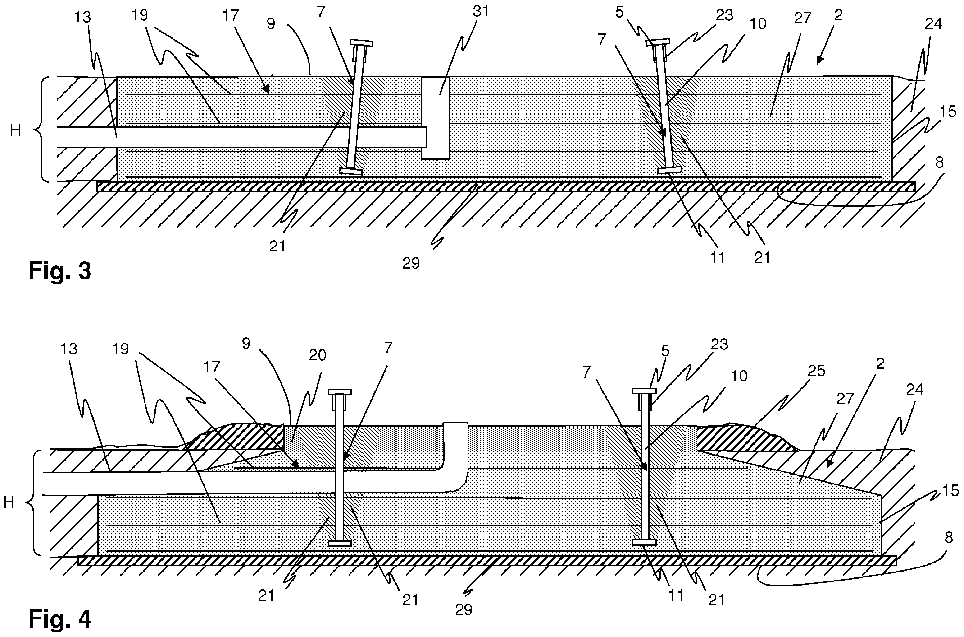

Mittels der Rückhängevorrichtungen 7 werden nun anders als im Stand der Technik die Kräfte aus der Vorspannung nicht mehr in einem oberen Bereich oder sukzessive über die Höhe des Fundaments 2 eingebracht, sondern in einem unteren Drittel H/3 der Fundamentplatte 27, vorliegend nahe an der Unterseite 8. Die Rückhängevorrichtungen 7, genauer gesagt, Längselemente 10 der Rückhängevorrichtungen 7, die in den Fig. 4 - 7 noch genauer beschrieben werden, sind hierzu von einer schlauchartigen Hülle 30, vorzugsweise aus einem reibungsmindernden Material, umgeben, so dass sie von der Fundamentplatte 27 statisch entkoppelt sind und eine Kraftweiterleitung an die untere Ankerplatte 11 ermöglichen. Vorteilhaft ist es dabei, wenn die schlauchartige Hülle 30 eine dickere Wandung aufweist, d.h. die Wandstärke vorzugsweise wenigstens 5 mm, bevorzugt wenigstens 10 mm und bevorzugt weniger als 20 mm beträgt, oder die Hülle 30 das Längselement 10 mit einer umlaufenden Toleranz bzw. einem Spiel, vorzugsweise einem Spiel von wenigstens 5 mm umgibt. Bevorzugt beträgt das Spiel wenigstens 10 mm und bevorzugt weniger als 20 mm. Da die Spannglieder knickfrei geführt werden müssen, ist es erforderlich, die Rückhängevorrichtungen 7 sehr exakt in dem Fundament 2 zu positionieren. Ist nun die Hülle 30 nachgiebig ausgeführt oder umgibt das Längselement 10 mit einem Spiel, so kann sich die Rückhängevorrichtung 7 noch ausrichten und die Toleranzanforderungen beim Einbau der Rückhängevorrichtungen 7 können reduziert werden.

Hierdurch kann eine wesentlich gleichmäßigere Belastung des Betons über die gesamte Fundamenthöhe H erreicht werden, so dass das Fundament 2 einfacher und weniger massiv ausgeführt werden kann. Auch das Spannen der Spannglieder 3 ist erleichtert, da sich die Vorspannebene nun nicht mehr wie im Stand der Technik unterhalb der Eingangsebene des Fundaments 2 befindet, sondern auf oder oberhalb der selben, wo eine gute Zugänglichkeit von der Oberseite 9 des Fundaments 2 her gegeben ist. Ein Spannkeller 26 ist ebenfalls nicht mehr erforderlich, so dass auch die Abdichtung unterhalb des Fundaments 2 mit einer wasserdichten Bodenplatte 28 entfallen kann. Gesonderte Zugangskonstruktionen für einen Spannkeller 26 sind somit ebenfalls nicht mehr erforderlich. Es ist aber natürlich nach wie vor möglich, wie vorliegend gezeigt, innerhalb des Fundaments 2 einen Innenraum 16 vorzusehen, welcher variabel ausgeführt werden kann und beispielsweise der Aufnahme von Bauteilen oder Montagehilfsmitteln bereits während der Montage des Turmes 1 dienen kann.

Insbesondere aber werden durch die Verankerung der Rückhängevorrichtungen 7 mittels der Ankerplatte 11 im unteren Drittel der Fundamentplatte 27 beim Spannen der Spannglieder 3 nicht nur die Betonfertigteile 4 vorgespannt, sondern zugleich auch eine Vorspannung F auf das Fundament 2 bzw. die Fundamentplatte 27 aufgebracht, wie durch die beiden Pfeile im linken Bereich der Figur 2 symbolisiert. Das Fundament 2 ist hierdurch wesentlich besser in der Lage, die Kräfte aus der Vorspannung sowie die dynamischen Kräfte im planmäßigen Betriebszustand aufzunehmen und kann dadurch wesentlich schlanker und materialsparender ausgeführt werden.

Die Spannglieder 3 werden dabei vorzugsweise derart vorgespannt, dass der Lasteinleitungsbereich 21 des Fundaments 2 im Lastfall des planmäßigen Betriebszustands, im Falle einer Windkraftanlage also im Regelbetrieb, stets überdrückt ist. Unter dem Lasteinleitungsbereich 21 wird dabei zumindest der gedachte Bereich verstanden, der sich oberhalb der unteren Ankerplatten 11 kegelförmig nach oben hin bis an die Oberseite 9 des Fundaments 2 erstreckt. Ebenso werden vorliegend unter dem Lastfall des planmäßigen Betriebszustands bzw. Regelbetriebs die ständigen, statischen Lasten durch die Gewichtskräfte des Turmes 1 und der an dem Turm 1 angeordneten Teile sowie statische und dynamische Betriebslasten verstanden. Im Falle einer Windkraftanlage umfasst der Lastfall des planmäßigen Betriebszustands somit z.B. die o.g. Gewichtskräfte, die horizontalen Lasten aus dem Vorgang der Windenergieerzeugung, die dynamischen Lasten aus der Nabendrehzahl, dem Rotorblattdurchgang sowie die an diesem Standort üblicherweise auftretenden Windlasten. Das Fundament 2 ist somit aufgrund dessen, dass es im Lasteinleitungsbereich im Lastfall des planmäßigen Betriebszustands bzw. Regelbetriebs stets überdrückt ist, zumindest im planmäßigen Betriebszustand keinerlei Zugspannungen unterworfen, was in Bezug auf die hohen dynamischen Ermüdungslasten vorteilhaft ist. Davon abzugrenzen sind der Lastfall des Störbetriebs sowie Sonderbedingungen, beispielsweise Extremwindbedingungen o. ä., in denen vereinzelte Zugspannungszustände toleriert werden können.

Die Bewehrung 17 des Fundaments 2 kann hierdurch vergleichsweise einfach ausgeführt werden und benötigt keine gesondert vorgeformten Bewehrungseisen 18. Vielmehr ist es möglich, einfache Betonstahlmatten 19 einzusetzen, welche beispielsweise eine rechteckige Grundform haben und sich beispielsweise aus parallel, ggf. auch orthogonal zueinander verlegten Bewehrungseisen zusammensetzen, und daher problemlos entsprechend der Abmessungen des Fundaments 2 vorgefertigt und in der Schalung platziert werden können. Beispielsweise können die rechteckigen Betonstahlmatten 19 mit Abmessungen von 2,0 - 2,5 m Breite und 10 - 13 m Länge vorgefertigt werden. Die Rechteckform in Verbindung mit derartigen Abmessungen ermöglicht einen problemlosen Transport zum Montageort und ein einfaches Handling auf der Baustelle. Ebenso ist das Einbringen der Bewehrung 17 in die Schalung erleichtert, da lediglich die einzelnen Betonstahlmatten 19 kreuzweise in der Schalung verlegt werden müssen. Demgegenüber war es im Stand der Technik mit Fundamenten 2 mit einem Spannkeller 26 erforderlich, aufwendig, z. T. mehrfach geformte Bewehrungseisen 18 vorzusehen, die aufgrund ihrer komplexen Form Mehraufwände bei der Verlegung nach sich ziehen, weil die Eisen zur gegenseitigen Übergreifung aufwändig positioniert werden müssen. Die Bewehrungen 17 sind ebenso wie in Figur 1 lediglich auf einer Seite des Fundaments 2 dargestellt, aber auf der gegenüberliegenden natürlich ebenso vorhanden bzw. umgeben sie den Innenraum 16 ringförmig. Bezüglich der Rückhängevorrichtungen 7 ist es vorteilhaft, wenn die untere Ankerplatte 11 wie vorliegend dargestellt zwar nahe der Unterseite 8 des Fundaments 2, jedoch oberhalb einer untersten Bewehrungslage bzw. der untersten Betonstahlmatte 19 angeordnet ist.

Das vorliegend gezeigte Fundament 2 weist weiterhin wenigstens ein Leerrohr 13 für die Zuführung von Leitungen auf. Vorliegend wird das Leerrohr 13 dem Fundament 2 von der Außenseite 15 her zugeführt und verläuft von dort bis in einen Innenraum 16 des Fundaments. Aufgrund der gegenüber dem Stand der Technik deutlich reduzierten Menge an Bewehrungen 17 ist die Zuführung von Leerrohren 13 durch das Fundament 2 hindurch nun problemlos möglich.

Figur 3 zeigt eine weitere Ausführung eines Fundaments 2. Im Unterschied zu der Ausführung der Figur 2 weist das vorliegende Fundament 2 einen rechteckigen Querschnitt auf und beinhaltet keinen Innenraum 16, sondern eine geschlossene Fundamentplatte 27. Das Fundament 2 kann hierdurch besonders einfach hergestellt werden, da die Schalung einfach aufgebaut werden kann. Zudem ist auch die Ausführung der Bewehrung 17 mit Betonstahlmatten 19 nochmals vereinfacht, weil aufgrund des gleich bleibenden Querschnitts und des fehlenden Innenraums 16 eine Vielzahl gleichartiger Betonstahlmatten 19 zum Einsatz kommen kann, die durchgängig aneinander anschließend in die Schalung eingebracht werden können. Daneben wird bei einem Fundament 2 mit einem rechteckigen Querschnitt ein im Vergleich zu einem abfallenden Fundament 2 höheres Gewicht erreicht, wodurch eine vorteilhafte Stabilisierung des Fundaments erzielt wird, so dass dieses die Betriebslasten besser aufnehmen kann. Zur Erhöhung des Gewichts trägt vorliegend auch die geschlossene Fundamentplatte 27 bei.

Der Turm 1 mit den Betonfertigteilen 4 ist vorliegend nicht dargestellt, sondern lediglich das Fundament 2 mit den Rückhängevorrichtungen 7. Auch hier ist ein Leerrohr 13 in das Fundament 2 eingegossen. Um die Verlegung des Leerrohres 13 in dem Fundament 2 zu vereinfachen, weist das vorliegende Fundament 2 eine Aussparung 31 in der Oberseite der geschlossenen Fundamentplatte 27 auf. Es kann somit ein einfaches, gerades Leerrohr 13 verwendet werden, das lediglich so in der Schalung platziert werden muss, dass es innerhalb der Aussparung 31 endet. Die Aussparung 31 wird vorzugsweise mit einer hier nicht dargestellten Abdeckung abgedeckt. Für die Aussparung 31 können kostengünstige Standardrohrelemente verwendet werden, für die es bereits vorkonfektionierte Abdeckplatten am Markt verfügbar gibt, die bereits vorab mit erforderlichen Durchbrüchen ausgestattet werden können. Es ist aber natürlich auch bei jeder Ausführung eines Fundaments 2 mit Rückhängevorrichtungen 7 nach wie vor möglich, einen Leerrohrgraben 14 unterhalb des Fundaments 2 vorzusehen. Weiterhin ist auch vorliegend das Ankerelement 5 als Bestandteil der Rückhängevorrichtung 7 dargestellt. Wie bereits zu Figur 2 ausgeführt, können die Ankerelemente 5 aber ebenso als gesonderte Bauteile vorgesehen werden oder die Spannglieder 3 können jeweils selbst ein Ankerelement 5 umfassen, welches direkt mit der Rückhängevorrichtung 7 verbunden werden kann.

Eine weitere Ausführung eines Fundaments 2 ist in Figur 4 dargestellt. Die Fundamentplatte 27 des Fundaments 2 ist ebenso wie die des Fundaments 2 der Figur 2 nach außen hin abfallend ausgeführt bzw. weist einen trapezförmigen Querschnitt auf, weist an ihrer Oberseite jedoch einen Ansatz 20 auf, welcher vorliegend kreisförmig zylindrisch ausgebildet ist. Dieser trägt ebenso wie die die Fundamentplatte 27 der Figur 3 dazu bei, dem Fundament 2 ein höheres Gewicht zu verleihen. Zudem wird der tragende Bereich im Lasteinleitungsbereich 21 erhöht. Um die Tragfähigkeit des Fundaments 2 noch zu verbessern, kann der Ansatz 20, der auch ringförmig ausgebildet sein könnte, aus einem Beton höherer Güte hergestellt sein als die Fundamentplatte 27. Dies ist vorliegend durch die stärkere Schraffur bzw. Punktierung des Ansatzes 20 angedeutet. Zudem ermöglicht es der Ansatz 20, daran angrenzend eine Erdanschüttung 25 vorzunehmen und dadurch das Fundament 2 noch weiter zu stabilisieren.

Auch vorliegend ist wieder ein Leerrohr 13 eingegossen, das vorliegend abknickend dargestellt ist. Natürlich könnte aber auch hier eine Aussparung 31 wie in Figur 3 gezeigt angeordnet sein.

Die Rückhängevorrichtungen 7 der Figur 4 sind gerade orientiert. Dies wird für einen zylindrischen Turm 1 bzw. ein zylindrisches Bauwerk so ausgeführt, um einen geradlinigen, knickfreien Verlauf der Spannglieder zu erreichen. Demgegenüber werden bei einem konischen Bauwerk (S. Fig. 2 und 3) die Rückhängevorrichtungen 7 ebenfalls geneigt einbetoniert und dadurch der Neigung der Spannglieder 3 bzw. der Konizität des Bauwerks angepasst. Die Spannglieder 3, die als externe Spannglieder 3 nahe der Wandung des Bauwerks bzw. Turms 1 geführt werden, können dadurch geradlinig mit den Rückhängevorrichtungen 7 verbunden werden. Das Abknicken der Spannglieder 3, was zu Beschädigungen der Spannglieder 3 führt, kann dadurch vermieden werden. Sind die Rückhängevorrichtungen 7 bzw. deren Längselement(e) 10, wie zuvor bereits beschrieben, mit einer umlaufenden Toleranz bzw. einem Spiel in einer Hülle 30 aufgenommen oder ist diese Hülle 30 nachgiebig ausgeführt, so trägt dies ebenfalls dazu bei, die Spannglieder möglichst geradlinig und knickfrei mit den Rückhängevorrichtungen 7 zu verbinden. Zudem kann mittels derartiger Hüllen 30 auch das Eindringen von Wasser in das Fundament 2 im Bereich der Rückhängevorrichtungen 7 vermieden werden.

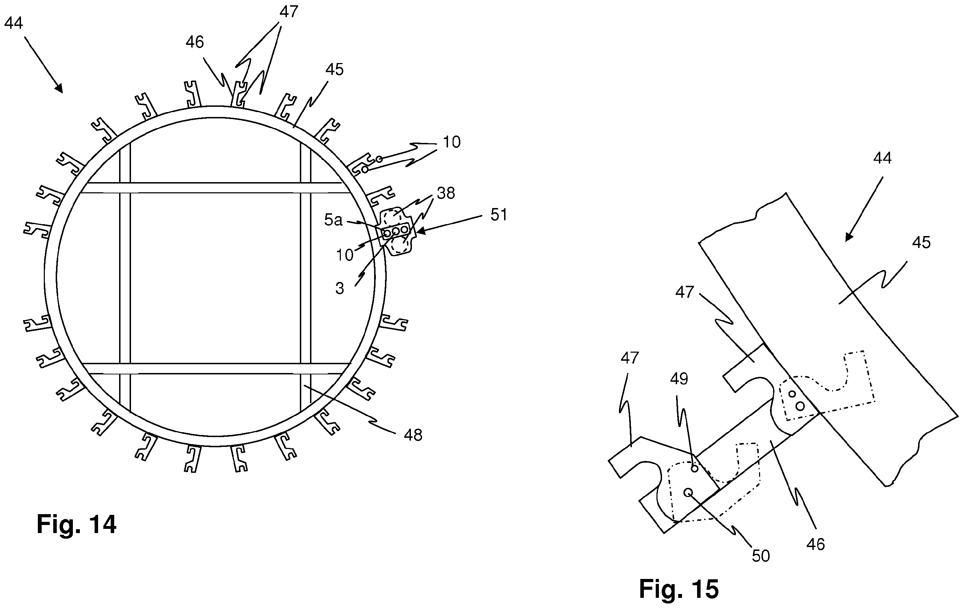

Um die Position und ggf. die Neigung der Rückhängevorrichtung(en) 7 möglichst exakt einzustellen, kann vorteilhafterweise eine Positioniervorrichtung zum Einsatz kommen. Diese kann beispielsweise als Positionierschablone oder Lehre 44 sowohl für eine einzelne Rückhängevorrichtung 7, als auch für mehrere Rückhängevorrichtungen 7 gemeinsam ausgebildet sein, wie beispielsweise in den Figuren 14 und 15 dargestellt. Denkbar ist es weiterhin, die Positioniervorrichtung exakt einzumessen, wobei die Positioniervorrichtung auch als temporäres Fixierelement der Rückhängevorrichtung(en) 7 bis zum Abschluss der Betonierarbeiten dienen kann. Ggf. kann die Positioniervorrichtung auch als verlorenes Fixierelement in dem Fundament verbleiben. Denkbar ist es weiterhin, die Rückhängevorrichtung(en) 7 mittels eines programmierbaren Positionierroboters zu positionieren, der auf der Baustelle nur einmal auf eine Referenzposition ausgerichtet werden muss.

Vorteilhaft ist es, wenn die Positioniervorrichtung montiert wird, nachdem die untere Bewehrungslage aus Betonstahlmatten 19 eingebaut worden ist. Die Positioniervorrichtung kann dabei in günstiger Weise mit Hilfe der unteren Bewehrungslage ausgerichtet werden und ggf. auch an dieser fixiert werden. Beispielsweise kann dies mit Hilfe von perforierten Konen erfolgen, die auf bzw. in der unteren Bewehrungslage eingebracht und dort verankert werden können.

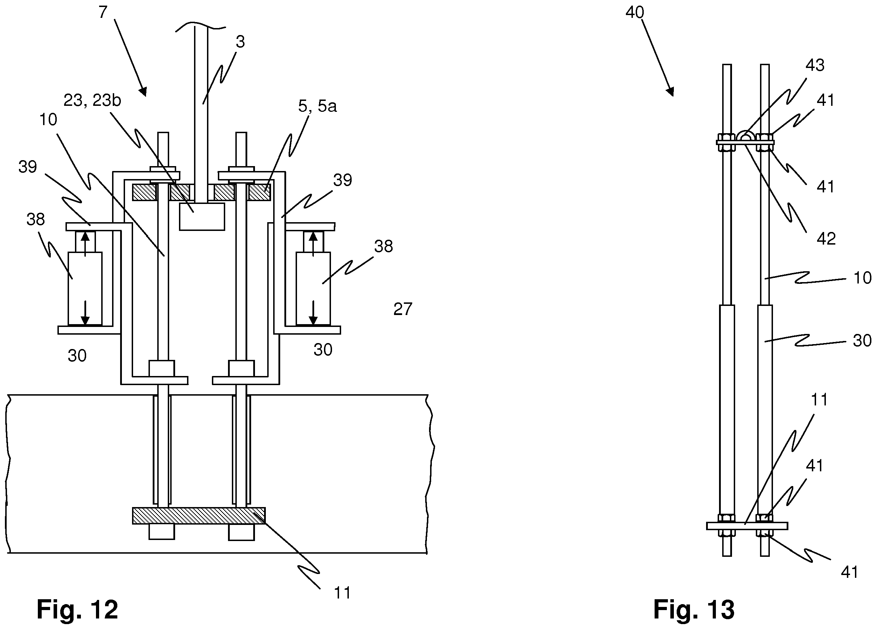

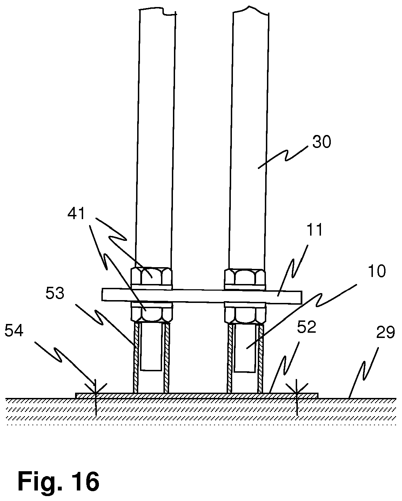

Ebenfalls denkbar ist eine Ausrichtung und ggf. auch Fixierung der Rückhängevorrichtungen 7 mit Hilfe von Hohlprofilen 53 als Positioniervorrichtung, die im Vorfeld eingemessen worden sind und über die untere Bewehrungslage hinausragen. Eine solche Positioniervorrichtung ist in Figur 16 gezeigt. Werden die Rückhängevorrichtungen 7 mit jeweils zwei Ankerstangen bzw. Längselementen 10 vormontiert wie zu Fig. 13 noch erläutert wird, so kann eine Positioniervorrichtung beispielsweise jeweils zwei auf einer Grundplatte 52 aufgeschweißte Stahlrohre als Hohlprofile 53 umfassen. Diese Grundplatte 52 kann direkt auf der Sauberkeitsschicht 29 genau aufgemessen und mittels geeigneten Befestigungselementen 54, beispielsweise Schrauben, befestigt werden. Die Hohlprofile 53 werden vorzugsweise vor dem Einsetzen der Ankerstangen bzw. Längselemente 10 mit Mörtel oder Fett gefüllt. Die Längselemente 10 bzw. die vormontierten Rückhängevorrichtungen 7 können später einfach von oben in die Hohlprofile 53 eingehoben werden, wobei überschüssiges Fett oder Mörtel durch hier nicht dargestellte seitliche Öffnungen in den Hohlprofilen 53 entweichen kann.

Vorteilhaft bei diesen Positioniervorrichtungen mit Hohlprofilen 53 ist es, dass diese nicht am Fundament 2 oder an der Bewehrung 17 befestigt werden müssen. Die untere Bewehrungslage kann somit eingebaut werden, ohne zuvor die Rückhängevorrichtungen 7 zu montieren, so dass diese Arbeitsschritte entkoppelt sind. Die Ausrichtung der Rückhängevorrichtungen 7 kann natürlich auch bei den in den anderen Figuren gezeigten Fundamenten 2 auf diese Weise erfolgen.

Ein Ansatz 20, wie er in der Figur 4 gezeigt ist, könnte natürlich ebenso auch bei dem in der Figur 3 dargestellten Fundament 2 vorgesehen werden und würde dort dieselben Vorteile entfalten. Ebenso könnte dabei natürlich auch, wie in Fig. 4 gezeigt, ein abknickendes Leerrohr 13 eingesetzt werden.

Die Figuren 5-7 zeigen verschiedene Ausführungen von Rückhängevorrichtungen 7, wobei die Rückhängevorrichtungen 7 jeweils in einem mit den Spanngliedern 3 mittels eines Ankerelements 5 verbundenen Zustand dargestellt sind.

Gemäß der Figur 5a ist eine erste Ausführung einer Rückhängevorrichtung 7 in einer schematischen Schnittdarstellung gezeigt, während Figur 5b die Rückhängevorrichtung 7 der Figur 5a in einer Seitenansicht zeigt. Die Rückhängevorrichtung 7 umfasst eine untere Ankerplatte 11 sowie vorliegend als Ankerelement 5 eine obere Ankerplatte 5a. Die obere Ankerplatte 5a dient dabei der Verankerung eines Spannglieds 3 mittels eines Ankers 23, der vorliegend als Spannanker 23a ausgeführt ist. Mit der unteren Ankerplatte fest verbunden sind 2 Längselemente 10, die vorliegend plattenförmig ausgeführt sind. Auch die obere Ankerplatte 5a ist vorliegend fest mit den Längselementen verbunden, so dass die Rückhängevorrichtung 7 in Form eines massiven Rahmens ausgeführt ist und eine besonders gute Stabilität aufweist. Die einzelnen Teile der Rückhängevorrichtung 7 können beispielsweise durch Schweißen miteinander verbunden sein. Vorliegend weist die Rückhängevorrichtung 7 weiterhin noch Versteifungen 12 auf, welche eine besonders gute Verankerung der Ankerplatte 11 bzw. der Rückhängevorrichtung 7 in dem Fundament 2 und damit eine gute Kraftübertragung ermöglichen. Die Längselemente 10 sind dabei von einer schlauchartigen Hülle 30 umgeben, die eine kontrollierte Lasteinleitung über der unteren Ankerpatte ermöglicht.

Die Figuren 6a und 6b zeigen eine andere Ausführung einer Rückhängevorrichtung 7, wobei die Figur 6a eine schematische, teilgeschnittene Vorderansicht und Figur 6b eine schematische Seitenansicht zeigt. Im Unterschied zur Figur 5 sind die Längselemente 10 hier in Form von Ankerstangen vorgesehen. Die Herstellung der Rückhängevorrichtung 7 ist hierdurch vereinfacht, da dabei Standardelemente verwendet werden können. Der Anker 23 des Spannglieds 3 ist auch hier wieder als Spannanker 23a ausgeführt.

Bei den Rückhängevorrichtungen 7 der Figuren 5 und 6 sind jeweils die obere Ankerplatte 5a und die untere Ankerplatte 11 durch die Längselemente 10 fest miteinander verbunden. Das Spannen der Spannglieder 3 erfolgt dabei in herkömmlicher Weise mittels der Spannanker 23a, wobei aufgrund der Verankerung der unteren Ankerplatte 11 unterseitig des Fundaments 2 dieses ebenfalls mit einer Vorspannung beaufschlagt wird. Zum Spannen der Spannglieder 3 ist es dabei erforderlich, Spannpressen unterhalb der oberen Ankerplatten 5a bzw. Ankerelemente 5 anzusetzen.

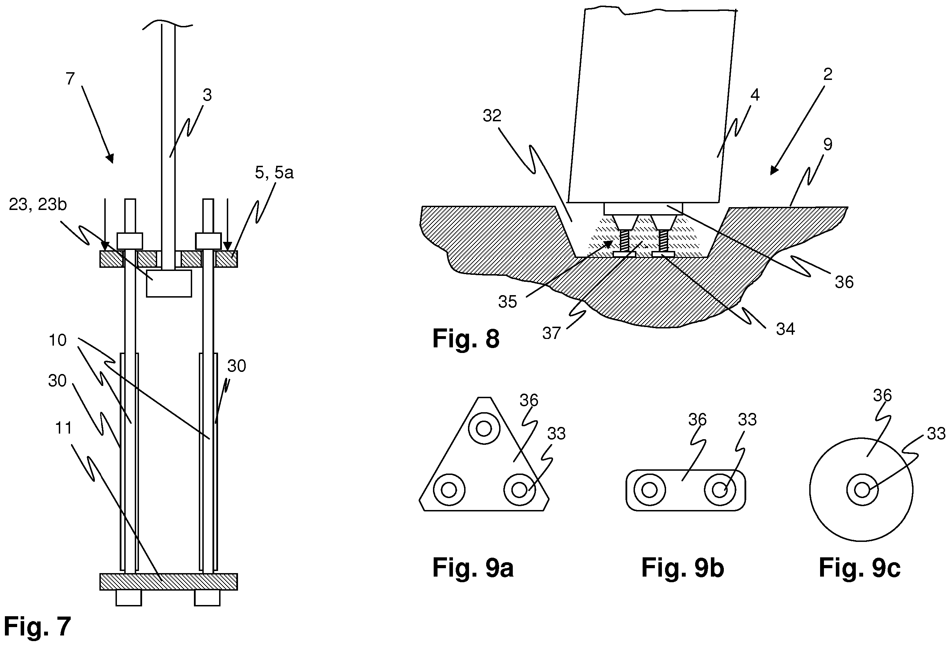

Figur 7 zeigt eine andere Ausführung einer Rückhängevorrichtung 7, bei welcher das Ankerelement 5 verstellbar mit den Längselementen 10, vorliegend ebenfalls wieder zwei Ankerstangen, verbunden ist. Diese Ausführung bietet die Möglichkeit, die Längselemente 10 vorzuspannen, wobei sich das Ankerelement 5 an dem Anker 23 des Spannglieds 3 abstützt. Durch das Vorspannen der Längselemente 10 wird somit zugleich auch das Spannglied 3 vorgespannt. Es ist daher auch möglich, ein Spannglied 3 einzusetzen, das an beiden Enden mit einem Festanker 23b versehen ist. Zum Vorspannen der Längselemente 10 und damit zugleich zum Spannen der Spannglieder 3 kann eine Spannpresse oberhalb des oberen Ankerelements 5 angesetzt werden, welche dann das Ankerelement 5 nach unten drückt, wie vorliegend durch die beiden Pfeile oberhalb des Ankerelements 5 symbolisiert. Vorteilhaft dabei ist es, dass die zwei auf der Oberseite der Ankerelemente 5 angeordneten Spannpressen platzsparender angeordnet werden und somit die Ankerelemente 5 günstiger ausgebildet werden können. Zudem besteht eine größere Gestaltungsfreiheit für die Rückhängevorrichtung 7, da kein Platz für das Ansetzen der vergleichsweise großen Spannpressen unterhalb der Ankerplatte 5 und/oder zwischen den Längselementen 10 vorgesehen werden muss. Es wäre daher auch denkbar, bei einer Rückhängevorrichtung 7 wie der der Figur 5 die obere Ankerplatte 5 verstellbar mit dem oder den Längselementen 10 zu verbinden.

Die in Figur 7 gezeigte Rückhängevorrichtung 7 bietet dabei auch die Möglichkeit, eventuelle Toleranzen in den Spanngliedern 3 bzw. in der Vorspannung der Spannglieder 3 auszugleichen, da jede der Ankerstangen bzw. jedes der Längselemente 10 einzeln gespannt werden kann. Hierdurch ist es möglich, an jedem einzelnen Spannglied 3 die Vorspannung anzupassen und hierdurch eine optimale Kraftweiterleitung zu erreichen.

Das Spannen der Spannglieder 3 kann bei allen Ausführungsbeispielen beispielsweise mittels einer herkömmlichen Hohlkolbenpresse erfolgen, wie in den Figuren 5 und 6 dargestellt. Figur 12 zeigt demgegenüber ein alternatives Spannverfahren, bei welchem Spannzangen 39 zum Einsatz kommen. Diese können jeweils oberhalb des oberen Ankerelements 5 und an einer Verankerung der Längselemente 10 angesetzt werden und ermöglichen in vorteilhafter Weise ein ziehendes Vorspannen der Spannglieder 3. Da die Spannzangen 39 hierzu von außerhalb an der Rückhängevorrichtung 7 angreifen können, kann das obere Ankerelement 5 deutlich kleiner und damit platzsparender ausgeführt werden. Zudem können preisgünstige, einfache Spannpressen 38 (ohne Hohlkolben) eingesetzt werden, die zudem wesentlich widerstandsfähiger sind als die zuvor beschriebenen Hohlkolbenpressen.

Figur 8 zeigt eine schematische Schnittdarstellung durch die Vergussrinne 32 eines Fundaments 2 mit einer Justiereinrichtung 35.

Justiereinrichtungen 35 sind im Stand der Technik grundsätzlich bekannt und dienen dazu, das auf dem Fundament 2 zu errichtende Bauwerk, insbesondere einen Windkraftturm, so auszurichten, dass das Bauwerk exakt senkrecht steht. Eine exakte horizontale und plane Oberfläche des Fundaments 2 herzustellen ist nämlich oftmals nicht möglich oder technisch sehr aufwändig. Ebenso weisen Betonfertigteile 4, welche auf dem Fundament 2 aufgebaut werden sollen, oftmals keine planen und exakt senkrecht zu einer Hochachse des Betonfertigteils 4 orientierten Kontaktflächen auf. Es ist daher entweder erforderlich, das Fundament 2 und/oder die Fertigteile 4 nach dem Gießen noch zu überarbeiten oder aber derartige Justiereinrichtungen 35 zur Ausrichtung des Bauwerks auf dem Fundament 2 einzusetzen. Bekannte Justiereinrichtungen 35 beinhalten dabei einen Lastverteilring, der entweder auf einbetonierten Ankerschrauben oder auf einer selbst nivellierenden Vergussmasse horizontal ausgerichtet wird und anschließend vollflächig untergossen wird. Das Einrichten derartiger Lastverteilringe ist vergleichsweise aufwändig und das Einbringen und Aushärten der Vergussmasse benötigt oftmals eine vergleichsweise lange Zeit.

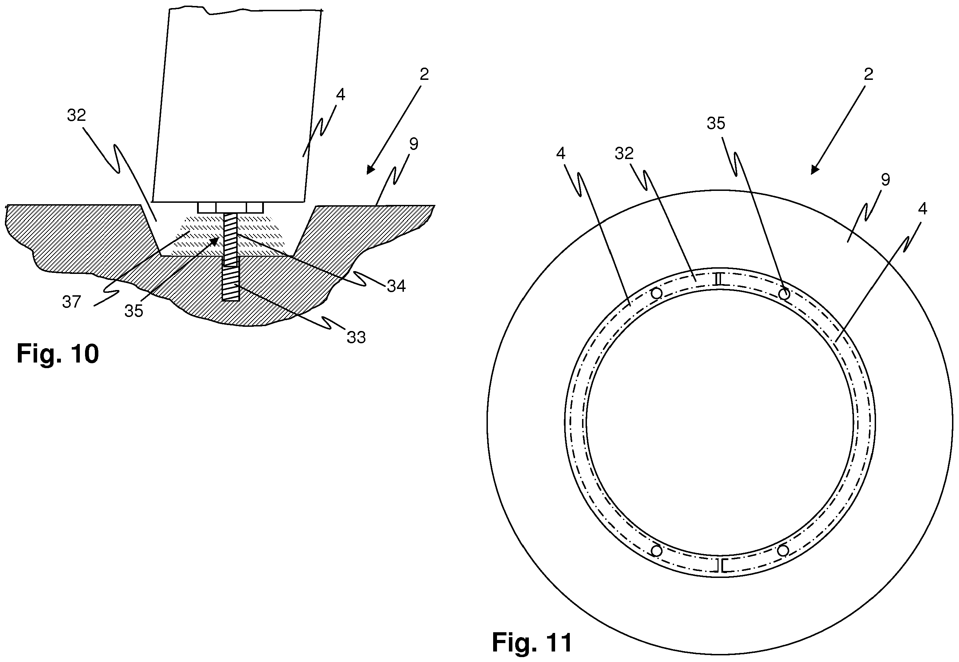

Die in den Figuren 8 und 10 gezeigten Justiereinrichtungen 35 zeichnen sich demgegenüber dadurch aus, dass sie lediglich ein Justierelement 34 wie eine Justierschraube und entweder ein in das Fundament 2 eingegossenes Aufnahmeelement 33 wie eine Gewindehülse oder Stellplatte 36, welche wenigstens ein solches Aufnahmeelement 33 beinhaltet, aufweisen. Die Stellplatten 36 bzw. die Justierelemente 34 weisen dabei eine vergleichsweise große Oberfläche auf, so dass ein zusätzlicher Lastverteilring nicht erforderlich ist.

Bei der Ausführung gemäß der Figur 8 beinhaltet die Justiereinrichtung 35 eine Stellplatte 36, die eine vergleichsweise große Oberfläche zur Verfügung stellt, auf der das vorzugsweise vorab geschliffene Betonfertigteil 4 direkt und exakt aufgelagert werden kann. Die Stellplatte 36 weist an ihrer Unterseite mehrere Aufnahmeelemente 33 zur Aufnahme von Justierelementen 34 auf. Vorliegend sind die Aufnahmeelemente 33 (siehe Figuren 9a bis c) als Innengewinde, hier als in die Stellplatte 36 eingebrachte Gewindehülsen, ausgebildet und die Justierelemente 34 als Justierschrauben. Es wäre aber ebenfalls denkbar, dass die Justierelemente 34 ein Innengewinde beinhalten und auf bolzenförmige Aufnahmeelemente 33 aufgeschraubt werden. Sinnvoll ist es weiterhin, die Aufnahmeelemente 33 bzw. Justierelemente 34 mit einer rutschhemmenden Beschichtung auszuführen, die eine Veränderung des einnivellierten Zustands verhindert.

Die Figuren 9a, 9b und 9c zeigen verschiedene Ausführungen von Stellplatten 36 mit Aufnahmeelementen 33 in einer Untersicht. Die Stellplatten 36 können verschiedene Grundformen wie dreieckig, rechteckig, rund oder oval und dergleichen aufweisen und auch unterschiedliche Anzahlen von Aufnahmeelementen 33 beinhalten. Nach einer besonders bevorzugten Ausführung wie in Fig. 9a gezeigt weist die Stellplatte 36 jedoch drei Aufnahmeelemente 33 auf, da diese hierdurch in besonders guter Weise in der Vergussrinne 32 ausgerichtet werden kann.

Wie nun der Figur 8 entnehmbar, ist es zur Montage der untersten Betonfertigteile 4 lediglich erforderlich, die Justiereinrichtungen 35 mit den Justierschrauben bzw. -elementen 34 und den Stellplatten 36 in der Vergussrinne 32 horizontal zu nivellieren. Eine Befestigung der Justierelemente 34 bzw. der Stellplatten 36 an dem Fundament 2 oder dem Betonfertigteil 4 ist dabei nicht erforderlich. Durch Betätigen der Justierelemente 34 können nun sämtliche in der Vergussrinne 32 platzierten Stellplatten 36 so ausgerichtet werden, dass sie eine exakt horizontale Oberfläche für das aufzusetzende Betonfertigteil 4 bilden. Natürlich ist es auch möglich, das Betonfertigteil 4 aufzusetzen und erst dann mittels der Justiereinrichtungen 35 dieses so auszurichten, dass das Bauwerk exakt vertikal ausgerichtet wird. In diesem Fall ist es auch möglich, Fertigungsungenauigkeiten der untersten Betonfertigteile 4 auszugleichen.

Figur 11 zeigt eine schematische Draufsicht auf ein Fundament 2 mit Justiereinrichtungen 35 sowie auf dem Fundament 2 angeordneten Betonfertigteilen 4. Vorliegend sind zwei ringsegmentförmige bzw. als Halbschalen ausgeführte Betonfertigteile 4 auf dem Fundament 2 angeordnet. Um die Betonfertigteile 4 auf dem Fundament 2 ausrichten zu können, werden wenigstens zwei, bevorzugt wenigstens drei Justiereinrichtungen 35 pro Betonfertigteil 4 vorgesehen. Vorliegend sind jeweils zwei Justiereinrichtungen 35 pro Betonfertigteil 4 dargestellt.

Da durch die Justiereinrichtung 35 gemäß der Figur 8 mittels der Stellplatte 36 eine vergleichsweise große Oberfläche zur Verfügung gestellt wird, kann mit nur zwei Justiereinrichtungen 35 je Betonfertigteil 4 bereits eine Ausrichtung der Betonfertigteile 4 erfolgen, insbesondere, wenn die Stellplatte 36, wie in Figur 9a gezeigt, drei Aufnahmeelemente 33 bzw. drei Justierelemente 34 umfasst. Nach dem Einstellen der Justiereinrichtungen 35 wird lediglich im Bereich der Justiereinrichtungen 35 teilweise eine Vergussmasse 37 eingebracht, um die Justiereinrichtungen 35 zu fixieren und in Verbindung mit der Justiereinrichtung 35 die Lastabtragung an das Fundament 2 sicherzustellen. Um die Lastabtragung in Verbindung mit der Vergussmasse 37 zu verbessern, sind die Stellplatten 36 vorzugsweise ebenfalls aus einer aushärtbaren Vergussmasse mit den Eigenschaften des letztendlich eingesetzten Vergussmaterials vergleichbaren mechanischen Eigenschaften hergestellt. Dabei ist es auch von Vorteil, dass bei der Herstellung der Stellplatten 36 die Aufnahmeelemente 33 direkt mit eingegossen werden können. Da die Vergussmasse 37 lediglich im Bereich der Justiereinrichtung 35 eingebracht werden muss, härtet diese vergleichsweise schnell aus bzw. können rasch erhärtende Vergussmaterialien eingesetzt werden, so dass die weitere Errichtung des Bauwerks nicht verzögert wird. Das vollständige Vergießen der Vergussrinne 32 ist für die Lastabtragung im Montagezustand der ersten Anfängerringe nicht erforderlich und kann daher auch zu einem späteren Zeitpunkt erfolgen.

Figur 10 zeigt einen Schnitt durch die Vergussrinne 32 eines Fundaments 2 mit einer anderen Ausführung einer Justiereinrichtung 35. Die Justiereinrichtung 35 beinhaltet in diesem Fall ein in der Vergussrinne 32 in das Fundament 2 eingegossenes Aufnahmeelement 33, hier eine Gewindehülse, sowie ein Justierelement 34. Das Justierelement 34 ist vorliegend als Justierschraube ausgebildet und weist einen im Vergleich zum Durchmesser der Justierschraube vergrößerten Kopf auf. Beispielsweise ist der Durchmesser des Kopfes wenigstens fünfmal größer als der Durchmesser der Justierschraube 34. Denkbar wäre es natürlich auch hier, das Aufnahmeelement 33 in Form eines Bolzens vorzusehen, auf welchen ein Justierelement 34 mit einem Innengewinde aufschraubbar ist. Sinnvoll ist es weiterhin in beiden Fällen, die Aufnahmeelemente 33 bzw. Justierelemente 34 mit einer rutschhemmenden Beschichtung auszuführen, die eine Veränderung des einnivellierten Zustands verhindert.

Auch bei dieser Ausführung der Justiereinrichtung 35 sind wiederum je Betonfertigteil 4 wenigstens zwei Justiereinrichtungen 35 vorgesehen, wie in Figur 11 gezeigt. Da das Fundament 2 gemäß der vorliegenden Erfindung aufgrund der Rückhängekonstruktion im Bereich seiner Oberseite 9 und somit auch im Bereich der Vergussrinne 32 wesentlich weniger Bewehrung 17 und insbesondere nur wenige, mattenartig verlaufende Bewehrungen 17 aufweist, ist es nun möglich, derartige Aufnahmeelemente 33 wie Dübel oder Anker mit Innengewinde in das Fundament 2 mit geringem Aufwand einzugießen. Die Justiereinrichtung 35 der Figur 10 kann daher in besonders vorteilhafter Weise mit einem Fundament 2 wie in den Figuren 2-4 beschrieben eingesetzt werden. Demgegenüber ist die Justiereinrichtung 35 der Figur 8 auch in Fundamenten 2 mit einer herkömmlichen Bewehrungsführung einsetzbar, da diese keine einbetonierten Elemente benötigt.

Auch bei der Justiereinrichtung 35 der Figur 10 kann zum Fixieren der Justiereinrichtung 35 eine Vergussmasse 37 im Bereich der Justiereinrichtung 35 eingebracht werden. Alternativ oder zusätzlich zum Einbringen einer Vergussmasse 37 ist es jedoch auch möglich, als Justierelemente 34 selbstsichernde Schrauben einzusetzen. Die Justiereinrichtung 35 ist dadurch nach dem Einstellen unmittelbar fixiert und die Errichtung des Bauwerks kann unmittelbar fortgesetzt werden. Die Justiereinrichtung 35 gemäß der Figur 10 ermöglicht daher eine besonders schnelle Errichtung des Bauwerks.

Figur 13 zeigt noch eine Detaildarstellung einer als Vormontageumfang 40 ausgeführten Rückhängevorrichtung 7. Der Vormontageumgang 70 umfasst dabei zumindest zwei Längselemente 10 sowie die untere Ankerplatte 11, die hier als gemeinsame Ankerplatte 11 vorgesehen ist, mittels welcher die Ankerstangen in an sich bekannter Weise mit Schraubenmuttern 41 verbunden sind. Weiterhin sind auch die Hüllen 30 bereits auf den Ankerstangen montiert und wasserdicht abgeschlossen, z.B. mit Densoband umwickelt, um den Eintritt von Wasser während des Transport und der Herstellung des Fundaments 2 zu vermeiden. Vorzugsweise werden die Ankerstangen bzw. Längselemente 10 bereits bei der Vormontage mit einem Korrosionsschutz versehen, beispielsweise mit einer Zinklamellenbeschichtung. Diese kann ebenso wie die Hülle 30 im Werk besonders kostengünstig und prozesssicher aufgebracht werden. Wie der Darstellung weiterhin entnehmbar ist, sind die beiden Längselemente 10 vorliegend auch oberhalb der Ankerplatte 11 durch ein aussteifendes Element 42, beispielsweise ein Blech, verbunden, so dass Lageänderungen der Längselemente verhindert werden. Das aussteifende Element 42 nimmt vorliegend zugleich auch noch eine Öse 43 für einen Kranhaken auf, so dass die vormontierten Rückhängevorrichtungen 7 im Paket mittels eines Krans in die Positioniervorrichtung eingehoben und zum Zentrum geneigt werden können.

Figur 14 zeigt eine Draufsicht auf eine Lehre 44, mittels welcher die Rückhängevorrichtungen 7 in vorteilhafter Weise in der Schalung des Fundaments 2 eingerichtet werden können. Vorzugsweise kommt eine solche Lehre in Kombination mit den bereits beschriebenen Positioniervorrichtungen mit Hohlprofilen 53 (s. Fig. 16), die direkt auf der Sauberkeitsschicht 29 befestigt werden können, zum Einsatz. Es ist aber auch denkbar, die Rückhängevorrichtungen 7 nur mittels einer solchen Lehre auszurichten und an ihrem unteren Ende ggf. in anderer Weise in der Schalung auszurichten und zu fixieren.

Die gezeigte Lehre 44 umfasst vorliegend einen ringförmigen Rahmen 45, an dessen Außenumfang radial nach außen weisend eine Vielzahl von Positionierschablonen 46 vorliegend starr angeordnet ist. Die Positionierschablonen 46 bestehen beispielsweise aus einem Blechmaterial und sind an den Rahmen 45 angeschweißt. Jede der Positionierschablonen 46 weist jeweils zwei Anschläge 47 auf, die vorliegend als halbkreisförmige Ausnehmungen in der Positionierschablone 46 ausgebildet sind. Die vormontierten Rückhängevorrichtungen 7 (s. Figur 13) können somit mit ihren Längselementen 10 zunächst seitlich an die Positionierschablonen 46 herangeführt werden und anschließend in die Anschläge 47 eingebracht werden. Vorliegend sind lediglich zwei Längselemente 10 dargestellt, um das Einheben der Rückhängevorrichtungen 7 zu symbolisieren.

Der Rahmen 45 ist auf einem Tragrahmen 48 aufgenommen, mittels welchem er in der Schalung des Fundaments 2 bzw. vorzugsweise direkt auf der Sauberkeitsschicht 29 platziert werden kann. Der Tragrahmen 48 kann dabei auch mehrteilig und zerlegbar ausgeführt sein. Dies bietet den Vorteil, dass der Teil des Tragrahmens 48, der bei der Betonage mit eingegossen wird, leicht von dem den Rahmen 45 tragenden Teil des Tragrahmens 48 gelöst werden kann, so dass letzter zusammen mit dem Rahmen 45 wieder verwendet werden kann.

Figur 15 zeigt eine andere Ausführung einer Lehre 44 in einer abgebrochenen Detaildarstellung. Die Die Positionierschablonen 46 sind ebenfalls starr an dem Rahmen 45 angeordnet, weisen jedoch jeweils zwei bewegbare, vorliegend gegenüber den Positionierschablonen 46 schwenkbare, Anschläge 47 auf. Die Anschläge 47 sind dabei jeweils um einen Drehpunkt 50 schwenkbar an der Positionierschablone 46 gelagert und beispielsweise mittels eine Stifts 49 in der ausgezogen dargestellten Position arretierbar. In dieser arretierten Position können wie zu Fig. 14 beschrieben die Rückhängevorrichtungen 7 eingehoben werden. Nach der Betonage können die Stifte 49 gelöst werden und die Anschläge 47 weggeklappt werden, so dass die Lehre 44 anschließend ohne geometrische Kollision problemlos entfernt werden kann.

Mittels einer solchen Lehre können die Rückhängevorrichtungen 7 derart angeordnet werden, dass die beiden Längselemente 10 radial hintereinander in dem Fundament angeordnet sind, wie auch in der Figur 14 ersichtlich. Die oberen Ankerplatten 5a bzw Ankerelemente 5 können hierdurch sehr kompakt ausgeführt werden und es wird eine gute Zugänglichkeit für die Spannpressen 38 erreicht, da diese orthogonal zu den beiden Längselementen, d.h. im Wesentlichen in Umfangsrichtung orientiert, angesetzt werden können. Um dies zu verdeutlichen, wurde in Figur 14 eine Spannvorrichtung 51 mit zwei Spannpressen 38 schematisch dargestellt, obwohl diese in der Realität natürlich erst nach dem Entfernen der Lehre 44 angesetzt wird. Weiterhin ist die obere Ankerplatte 5a der Rückhängevorrichtung 7 ersichtlich, durch welche die beiden Längselemente 10 sowie das Spannglied 3 hindurchführen.

Die Erfindung ist nicht auf die dargestellten und beschriebenen Ausführungsbeispiele beschränkt. So wurde vorliegend die Erfindung am Beispiel eines Windkraftturmes aus Betonfertigteilen dargestellt. Das beschriebene Fundament mit einer oder mehreren Rückhängevorrichtungen ist jedoch für jedes Bauwerk aus Spannbeton geeignet, bei welchem die Spannglieder, die das Bauwerk vorspannen, im Fundament verankert werden sollen. Beispielsweise könnte das Bauwerk auch ein vorgespannter Behälter sein, der in einem Pumpspeicherkraftwerk als Wasserreservoir dient. Weiterhin wäre die beschriebene Rückhängevorrichtung auch in einem Fundament für Bauwerke aus Stahlrohrsegmenten oder auch Segmenten aus anderen Materialien wie Verbundwerkstoffen einsetzbar.

Weiterhin sind in den Figuren 6 und 7 Rückhängevorrichtungen 7 gezeigt, die jeweils zwei Längselemente 10 umfassen, die eine gemeinsame untere Ankerplatte 11 aufweisen. Es ist aber auch denkbar, jedem der Längselemente 10 jeweils eine eigene untere Ankerplatte 11 zuzuordnen.

Weiterhin wurden sämtlich Merkmale lediglich exemplarisch anhand der Figuren beschrieben. Merkmale und Merkmalskombinationen, die nur in einem Ausführungsbeispiel beschrieben wurden, können selbstverständlich bei anderen Ausführungen ebenfalls oder in anderer Kombination vorhanden sein. Weitere Abwandlungen sowie Kombinationen im Rahmen der Patentansprüche fallen ebenfalls unter die Erfindung.

### Bezugszeichenliste

- 1: Turm
- 2: Fundament
- 3: Spannglied
- 4: Betonfertigteil
- 5: Ankerelement
- 5a: obere Ankerplatte
- 6: Hüllrohr
- 7: Rückhängevorrichtung
- 8: Unterseite des Fundaments
- 9: Oberseite des Fundaments
- 10: Längselement
- 11: untere Ankerplatte
- 12: Versteifung
- 13: Leerrohr
- 14: Leerrohrgraben
- 15: Außenseite des Fundaments
- 16: Innenraum des Fundaments
- 17: Bewehrung
- 18: Bewehrungseisen
- 19: Betonstahlmatte
- 20: Ansatz
- 21: Lasteinleitungsbereich
- 22: Konsolartiger Vorsprung
- 23: Anker des Spannglieds
- 23a: Spannanker
- 23b: Festanker
- 24: Boden
- 25: Erdanschüttung
- 26: Spannkeller
- 27: Fundamentplatte
- 28: Bodenplatte
- 29: Sauberkeitsschicht
- 30: Hülle
- 31: Aussparung
- 32: Vergussrinne
- 33: Aufnahmeelement
- 34: Justierelement
- 35: Justiereinrichtung
- 36: Stellplatte
- 37: Vergussmasse
- 38: Spannpresse
- 39: Spannzange
- 40: Vormontageumfang
- 41: Schraubenmutter
- 42: aussteifendes Element
- 43: Öse
- 44: Lehre
- 45: Rahmen
- 46: Positionierschablone
- 47: Anschlag
- 48: Tragrahmen
- 49: Stift
- 50: Drehpunkt
- 51: Spannvorrichtung
- 52: Grundplatte
- 53: Hohlprofil
- 54: Befestigungselement
- H: Höhe der Fundamentplatte
- H/3: unteres Drittel der Fundamentplatte
- F: Vorspannung

## Patentansprüche

1. Vorgespannter Behälter oder Windkraftturm, welcher mittels einer Vielzahl von Spanngliedern (3) vorgespannt ist, mit einem Fundament (2), an welchem die Vielzahl von Spanngliedern (3) verankert ist, und mit wenigstens einem mit dem Fundament (2) verbundenen Ankerelement (5, 5a), an welchem wenigstens ein Spannglied (3) der Vielzahl von Spanngliedern (3) verankert ist, wobei das Fundament (2) wenigstens eine in das Fundament (2) eingegossene Rückhängevorrichtung (7) umfasst, Rückhängevorrichtung (7) eine in das Fundament (2) eingegossene, untere Verankerung, insbesondere eine untere Ankerplatte (11), umfasst, und wobei die Verankerung innerhalb eines unteren Drittels einer Fundamentplatte (27) des Fundaments (2) eingegossen ist, **dadurch gekennzeichnet, dass** sich die in das Fundament eingegossene Rückhängevorrichtung bis an eine Oberseite (9) des Fundaments (2) oder darüber hinaus erstreckt und diese Rückhängevorrichtung mit dem Ankerelement (5, 5a) verbunden ist.

2. Vorgespannter Behälter oder Windkraftturm nach dem vorherigen Anspruch, **dadurch gekennzeichnet, dass** die untere Verankerung, insbesondere Ankerplatte (11), an einer Unterseite (8) der Fundamentplatte (27) des Fundaments (2) eingegossen ist und die Rückhängevorrichtung (7) sich von der Unterseite (8) bis an die Oberseite (9) des Fundaments (2) oder darüber hinaus erstreckt.

3. Vorgespannter Behälter oder Windkraftturm nach einem der vorherigen Ansprüche, **dadurch gekennzeichnet, dass** das Fundament (2) mittels der Rückhängevorrichtung (7) mit einer Vorspannung beaufschlagt ist.

4. Vorgespannter Behälter oder Windkraftturm nach einem der vorherigen Ansprüche, **dadurch gekennzeichnet, dass** die Spannglieder (3) derart vorgespannt sind, dass ein Lasteinleitungsbereich (21) des Fundaments (2), welcher sich über der unteren Verankerung, insbesondere Ankerplatte (11), erstreckt, zumindest im Lastfall des planmäßigen Betriebszustands stets überdrückt ist.

5. Vorgespannter Behälter oder Windkraftturm nach einem der vorherigen Ansprüche, **dadurch gekennzeichnet, dass** die Rückhängevorrichtung (7) mit dem Ankerelement (5, 5a) verbunden ist und dass an dem Ankerelement (5, 5a) ein Anker (23, 23a, 23b) eines Spannglieds (3) der Vielzahl von Spanngliedern (3) verankert ist.

6. Vorgespannter Behälter oder Windkraftturm nach einem der vorherigen Ansprüche, **dadurch gekennzeichnet, dass** die Rückhängevorrichtung (7) wenigstens ein Längselement (10), insbesondere eine Ankerstange, vorzugsweise wenigstens zwei Längselemente (10), zur Verbindung der unteren Verankerung, insbesondere Ankerplatte (11), mit dem Ankerelement (5, 5a), umfasst.

7. Vorgespannter Behälter oder Windkraftturm nach einem der vorherigen Ansprüche, **dadurch gekennzeichnet, dass** das Längselement (10) der Rückhängevorrichtung (7) von einer Hülle (30), insbesondere einer Hülle (30) aus einem reibungsmindernden Material, umgeben ist.

8. Vorgespannter Behälter oder Windkraftturm nach einem der vorherigen Ansprüche, **dadurch gekennzeichnet, dass** eine Vielzahl von Rückhängevorrichtungen (7) in das Fundament (2) eingegossen ist, wobei vorzugsweise jede der Rückhängevorrichtungen (7) mit jeweils einem Ankerelement (5, 5a) verbindbar ist oder verbunden ist.

9. Vorgespannter Behälter oder Windkraftturm nach einem der vorherigen Ansprüche, **dadurch gekennzeichnet, dass** die Rückhängevorrichtungen (7) jeweils wenigstens zwei Längselemente (10), insbesondere zwei Ankerstangen, umfassen, wobei vorzugsweise die zwei Längselemente (10) in radialer Richtung des Fundaments (2) hintereinanderliegend angeordnet sind.

10. Vorgespannter Behälter oder Windkraftturm nach einem der vorherigen Ansprüche, **dadurch gekennzeichnet, dass** die Fundamentplatte (27) des Fundaments (2) als geschlossene Fundamentplatte (27) ausgeführt ist, wobei vorzugsweise die Fundamentplatte (27) des Fundaments (2) einen im Wesentlichen rechteckigen Querschnitt aufweist.

11. Vorgespannter Behälter oder Windkraftturm nach einem der vorherigen Ansprüche, **dadurch gekennzeichnet, dass** das Fundament (2) eine Bewehrung (17) aus mehreren einzelnen, übereinander angeordneten und vorzugsweise vorgefertigten Betonstahlmatten (19) aufweist, wobei vorzugsweise die Betonstahlmatten (19) derart verlegt sind, dass ihre Bewehrungseisen (18) orthogonal zueinander verlaufen.

12. Vorgespannter Behälter oder Windkraftturm nach einem der vorherigen Ansprüche, **dadurch gekennzeichnet, dass** das Fundament (2) an seiner Oberseite (9) einen vorzugsweise ringförmigen Ansatz (20) aufweist, wobei vorzugsweise der Ansatz (20) eine höhere Betongüte als die Fundamentplatte (27) aufweist.

13. Vorgespannter Behälter oder Windkraftturm nach einem der vorherigen Ansprüche, **dadurch gekennzeichnet, dass** das Fundament (2) an seiner Oberseite (9) eine Vergussrinne (32) aufweist und dass im Bereich der Vergussrinne (32) wenigstens zwei, vorzugsweise wenigstens drei, Aufnahmeelemente (33), vorzugsweise Gewindehülsen, zur Aufnahme von Justierelementen (34), vorzugsweise Justierschrauben, in das Fundament (2) eingegossen sind.

14. Vorgespannter Behälter oder Windkraftturm nach einem der vorherigen Ansprüche, **dadurch gekennzeichnet, dass** das Bauwerk eine Mehrzahl von auf dem Fundament (2) übereinander angeordneten, ringförmigen oder ringsegmentförmigen Betonfertigteilen (4) aufweist, und dass zwischen einem untersten Betonfertigteil (4) und dem Fundament (2) wenigstens zwei, vorzugsweise wenigstens drei, Justiereinrichtungen (35) angeordnet sind.

15. Verfahren zur Herstellung eines mittels einer Vielzahl von Spanngliedern (3) vorgespannten Behälters oder Windkraftturms, wobei die Vielzahl von Spanngliedern (3) mittels wenigstens eines Ankerelements (5, 5a) an einem Fundament (2) des Behälters oder Windkraftturms verankert wird, **dadurch gekennzeichnet, dass** wenigstens eine Rückhängevorrichtung (7) mit einer unteren Verankerung, insbesondere einer unteren Ankerplatte (11), in das Fundament (2) eingegossen wird, welche sich bis an eine Oberseite (9) des Fundaments (2) oder darüber hinaus erstreckt, wobei die untere Verankerung der Rückhängevorrichtung (7) innerhalb eines unteren Drittels einer Fundamentplatte (27) des Fundaments (2) eingegossen wird, und dass das wenigstens eine Ankerelement (5) mit der Rückhängevorrichtung (7) verbunden wird und das Fundament (2) mittels der Rückhängevorrichtung (7) mit einer Vorspannung beaufschlagt wird.

16. Verfahren nach dem vorhergehenden Anspruch, **dadurch gekennzeichnet, dass** die Spannglieder (3) derart vorgespannt werden, dass ein Lasteinleitungsbereich (21) des Fundaments (2) zumindest im Lastfall des planmäßigen Betriebszustands stets überdrückt ist, wobei vorzugsweise die Spannglieder (3) mittels einer Spannzange (39) gespannt werden.

17. Verfahren nach einem der vorhergehenden Ansprüche 15 oder 16, **dadurch gekennzeichnet, dass** zunächst eine Lehre (44) für die Einrichtung der Rückhängevorrichtungen (7) auf einer Sauberkeitsschicht und/oder in einer Schalung des Fundaments (2) platziert wird und anschließend die Rückhängevorrichtungen (7) mittels der Lehre (44) auf der Sauberkeitsschicht und/oder in der Schalung platziert werden, wobei vorzugsweise die Rückhängevorrichtung (7) mit vorzugsweise jeweils zwei Längselementen (10) und jeweils einer gemeinsamen unteren Ankerplatte (11) vormontiert werden und als Vormontageumfang (40) in der Schalung platziert werden.

## Claims

1. A pre-stressed container or wind turbine tower, pre-stressed by means of a plurality of tensioning elements (3), having a foundation (2), at which the plurality of tensioning elements (3) is anchored and having at least one anchor element (5, 5a) attached to the foundation (2), to which at least one tensioning element (3) of the plurality of tensioning elements (3) is anchored, wherein the foundation (2) includes at least one suspension device (7) cast into the foundation (2), the suspension device (7) includes a lower anchoring, in particular a lower anchor plate (11), cast into the foundation (2) and wherein the lower anchoring is cast inside a lower third of a foundation slab (27) of the foundation (2) **characterized in that** the suspension device cast into the foundation (2) extends to an upper side (9) of the foundation (2) or beyond and that the suspension device is attached to the anchor element (5, 5a).

2. Pre-stressed container or wind turbine tower according to the previous claim, **characterized in that** the lower anchoring, in particular the anchor plate (11), is cast into a lower side (8) of the foundation slab (27) of the foundation (2) and the suspension device (7) extends from the lower side (8) to the upper side (9) of the foundation (2) or beyond.

3. Pre-stressed container or wind turbine tower according to one of the previous claims, **characterized in that** a pre-stress has been applied to the foundation (2) by means of the suspension device (7).

4. Pre-stressed container or wind turbine tower according to one of the previous claims, **characterized in that** the tensioning elements (3) are pre-stressed in such a way that a load transfer area (21) of the foundation (2), which extends across the lower anchoring, in particular the anchor plate (11), is always overcompressed at least in the loading condition of the scheduled operating state.

5. Pre-stressed container or wind turbine tower according to one of the previous claims, **characterized in that** the suspension device (7) is attached to the anchor element (5, 5a) and an anchor (23, 23a, 23b) of one tensioning element (3) of the plurality of tensioning elements (3) is anchored to the anchor element (5, 5a).

6. Pre-stressed container or wind turbine tower according to one of the previous claims, **characterized in that** the suspension device (7) includes at least one longitudinal element (10), in particular one anchor rod, preferably at least two longitudinal elements (10) to connect the lower anchoring, in particular the anchor plate (11), to the anchor element (5, 5a).

7. Pre-stressed container or wind turbine tower according to one of the previous claims, **characterized in that** the longitudinal element (10) of the suspension device (7) is surrounded by an envelope (30), in particular an envelope (30) made of a friction-reducing material.

8. Pre-stressed container or wind turbine tower according to one of the previous claims, **characterized in that** a plurality of suspension devices (7) is cast into the foundation (2), wherein preferably each suspension device (7) is or can be attached to one anchor element (5, 5a).

9. Pre-stressed container or wind turbine tower according to one of the previous claims, **characterized in that** the suspension devices (7) include in each case two longitudinal elements (10), in particular two anchor rods, wherein preferably the two longitudinal elements (10) are arranged one after another in radial direction of the foundation (2).

10. Pre-stressed container or wind turbine tower according to one of the previous claims, **characterized in that** the foundation slab (27) of the foundation (2) is executed as closed foundation slab (27), wherein preferably the foundation slab (27) of the foundation (2) has an essentially rectangular cross section.

11. Pre-stressed container or wind turbine tower according to one of the previous claims, **characterized in that** the foundation (2) has a reinforcement (17) consisting of several individual reinforcement and preferably prefabricated steel meshes (19) arranged on top of one another, wherein preferably the reinforcement steel meshes (19) are laid in such a way that their reinforcement bars (18) run in orthogonal fashion to one another.

12. Pre-stressed container or wind turbine tower according to one of the previous claims, **characterized in that** the foundation (2) has on its upper side (9) a preferably ring-shaped projection (20), wherein preferably the projection (20) is of a higher concrete quality than the foundation slab (27).

13. Pre-stressed container or wind turbine tower according to one of the previous claims, **characterized in that** the foundation (2) has a casting channel (32) on its upper side (9) and that in the area of the casting channel (32) at least two, preferably three, receiving elements (33), preferably threaded sleeves, are cast into the foundation (2) to receive adjusting elements (34), preferably adjusting screws.

14. Pre-stressed container or wind turbine tower according to one of the previous claims, **characterized in that** the structure has several ring-shaped or ring segment-shaped prefabricated concrete parts (4) arranged on top of one another on the foundation (2), and that at least two, preferably at least three, adjusting devices (35) are arranged between a lowest prefabricated concrete part (4) and the foundation (2).

15. Method to manufacture a container or wind turbine tower pre-stressed by a plurality of tensioning elements (3), wherein the plurality of tensioning elements (3) is anchored to the foundation (2) of the container or wind turbine tower by means of at least one anchor element (5, 5a), **characterized in that** at least one suspension device (7) having a lower anchoring, in particular a lower anchor plate (11), is cast into the foundation (2), which extends to an upper side (9) of the foundation (2) or beyond, wherein the lower anchoring of the suspension device (7) is cast inside a lower third of a foundation slab (27) of the foundation (2) and that the at least one anchor element (5) is attached to the suspension device (7) and pre-stress is applied to the foundation (2) by means of the suspension device (7).

16. Method according to the previous claim, **characterized in that** the tensioning elements (3) are pre-stressed in such a way that a load transfer area (21) of the foundation (2) is always overcompressed at least in the loading condition of the scheduled operating state, wherein preferably the tensioning elements (3) are tensioned by means of a collet (39).

17. Method according to one of the previous claims 15 to 16, **characterized in that** initially a template (44) for installing the suspension devices (7) is placed on a granular subbase and/or in a formwork of the foundation (2) and then the suspension devices (7) are placed on the granular subbase and/or in the formwork by means of the template (44), wherein preferably the suspension devices (7) with preferably in each case two longitudinal elements (10) and in each case one common lower anchor plate (11) pre-assembled and placed as pre-assembly perimeter (40) in the formwork.

## Revendications

1. Récipient ou tour d'éolienne précontraint(e), qui est précontraint(e) au moyen d'une pluralité d'éléments de précontrainte (3), avec une fondation (2), sur laquelle est ancrée la pluralité d'éléments de précontrainte (3), et avec au moins un élément d'ancrage (5, 5a) relié à la fondation (2), sur lequel est ancré au moins un élément de précontrainte (3) de la pluralité d'éléments de précontrainte (3), dans lequel la fondation (2) comprend au moins un dispositif d'accrochage arrière (7) coulé dans la fondation (2), le dispositif d'accrochage arrière (7) comprend un ancrage inférieur coulé dans la fondation (2), en particulier une plaque d'ancrage inférieure (11), et dans lequel l'ancrage est coulé à l'intérieur d'un tiers inférieur d'une plaque de fondation (27) de la fondation (2), caractérisé(e) en ce que le dispositif d'accrochage arrière coulé dans la fondation s'étend jusqu'à une face supérieure (9) de la fondation (2) ou au-delà et ce dispositif d'accrochage arrière est relié à l'élément d'ancrage (5, 5a).

2. Récipient ou tour d'éolienne précontraint(e) selon la revendication précédente, caractérisé(e) en ce que l'ancrage inférieur, en particulier la plaque d'ancrage (11), est coulé sur une face inférieure (8) de la plaque de fondation (27) de la fondation (2) et le dispositif d'accrochage arrière (7) s'étend depuis la face inférieure (8) jusqu'à la face supérieure (9) de la fondation (2) ou au-delà.

3. Récipient ou tour d'éolienne précontraint(e) selon l'une quelconque des revendications précédentes, caractérisé(e) en ce que la fondation (2) est soumise à une précontrainte au moyen du dispositif d'accrochage arrière (7).

4. Récipient ou tour d'éolienne précontraint(e) selon l'une quelconque des revendications précédentes, caractérisé(e) en ce que les éléments de précontrainte (3) sont précontraints de sorte qu'une zone d'introduction de charge (21) de la fondation (2), qui s'étend au-dessus de l'ancrage inférieur, en particulier de la plaque d'ancrage (11), est toujours surpressée au moins dans le cas de charge de l'état de fonctionnement régulier.

5. Récipient ou tour d'éolienne précontraint(e) selon l'une quelconque des revendications précédentes, caractérisé(e) en ce que le dispositif d'accrochage arrière (7) est relié à l'élément d'ancrage (5, 5a) et en ce qu'une ancre (23, 23a, 23b) d'un élément de précontrainte (3) de la pluralité d'éléments de précontrainte (3) est ancrée à l'élément d'ancrage (5, 5a).

6. Récipient ou tour d'éolienne précontraint(e) selon l'une quelconque des revendications précédentes, caractérisé(e) en ce que le dispositif d'accrochage arrière (7) comprend au moins un élément longitudinal (10), en particulier une tige d'ancrage, de préférence au moins deux éléments longitudinaux (10), pour relier l'ancrage inférieur, en particulier la plaque d'ancrage (11), à l'élément d'ancrage (5, 5a).

7. Récipient ou tour d'éolienne précontraint(e) selon l'une quelconque des revendications précédentes, caractérisé(e) en ce que l'élément longitudinal (10) du dispositif d'accrochage arrière (7) est entouré(e) d'une enveloppe (30), en particulier d'une enveloppe (30) en un matériau réduisant la friction.

8. Récipient ou tour d'éolienne précontraint(e) selon l'une quelconque des revendications précédentes, caractérisé(e) en ce qu'une pluralité de dispositifs d'accrochage arrière (7) sont coulés dans la fondation (2), dans lequel, de préférence, chacun des dispositifs d'accrochage arrière (7) peut ou est être relié à, respectivement, un élément d'ancrage (5, 5a).

9. Récipient ou tour d'éolienne précontraint(e) selon l'une quelconque des revendications précédentes, caractérisé(e) en ce que les dispositifs d'accrochage arrière (7) comprennent chacun au moins deux éléments longitudinaux (10), en particulier deux tiges d'ancrage, dans lequel, de préférence, les deux éléments longitudinaux (10) sont disposés l'un derrière l'autre dans la direction radiale de la fondation (2).

10. Récipient ou tour d'éolienne précontraint(e) selon l'une quelconque des revendications précédentes, caractérisé(e) en ce que la plaque de fondation (27) de la fondation (2) est réalisée sous forme de plaque de fondation fermée (27), sachant que la plaque de fondation (27) de la fondation (2) présente de préférence une section transversale sensiblement rectangulaire.

11. Récipient ou tour d'éolienne précontraint(e) selon l'une quelconque des revendications précédentes, caractérisé(e) en ce que la fondation (2) comprend une armature (17) constituée de plusieurs treillis armés (19) individuels, disposés les uns au-dessus des autres et de préférence préfabriqués, sachant que, de préférence, les treillis armés (19) sont posés de sorte que leurs fers d'armature (18) s'étendent orthogonalement les uns par rapport aux autres.

12. Récipient ou tour d'éolienne précontraint(e) selon l'une quelconque des revendications précédentes, caractérisé(e) en ce que la fondation (2) présente sur sa face supérieure (9) un épaulement (20) de préférence annulaire, sachant que l'épaulement (20) présente de préférence une qualité de béton supérieure à celle de la plaque de fondation (27).

13. Récipient ou tour d'éolienne précontraint(e) selon l'une quelconque des revendications précédentes, caractérisé(e) en ce que la fondation (2) présente sur sa face supérieure (9) un caniveau de scellement (32) et en ce que, dans la zone du caniveau scellement (32), au moins deux, de préférence au moins trois, éléments d'accueil (33), de préférence des douilles filetées, sont coulés dans la fondation (2) pour accueillir des éléments d'ajustage (34), de préférence des vis d'ajustage.

14. Récipient ou tour d'éolienne précontraint(e) selon l'une quelconque des revendications précédentes, caractérisé(e) en ce que l'ouvrage présente une pluralité d'éléments préfabriqués en béton (4) de forme annulaire ou en forme de segment annulaire, disposés les uns au-dessus des autres sur la fondation (2), et en ce qu'au moins deux, de préférence au moins trois, dispositifs d'ajustage (35) sont disposés entre un élément préfabriqué en béton (4) le plus bas et la fondation (2).

15. Procédé pour fabriquer un récipient ou une tour d'éolienne précontraint(e) au moyen d'une pluralité d'éléments de précontrainte (3), dans lequel la pluralité d'éléments de précontrainte (3) est ancrée au moyen d'au moins un élément d'ancrage (5, 5a) à une fondation (2) du récipient ou de la tour d'éolienne, caractérisé en ce qu'au moins un dispositif d'accrochage arrière (7), en particulier une plaque d'ancrage inférieure (11), est coulé avec un ancrage inférieur dans la fondation (2), lequel s'étend jusqu'à une face supérieure (9) de la fondation (2) ou au-delà, dans lequel l'ancrage inférieur du dispositif d'accrochage arrière (7) est coulé à l'intérieur d'un tiers inférieur d'une plaque de fondation (27) de la fondation (2), et en ce que le, au moins un, élément d'ancrage (5) est relié au dispositif d'accrochage arrière (7) et la fondation (2) est soumise à une précontrainte au moyen du dispositif d'accrochage arrière (7).

16. Procédé selon la revendication précédente, **caractérisé en ce que** les éléments de précontrainte (3) sont précontraints de sorte qu'une zone d'introduction de charge (21) de la fondation (2) est toujours surpressée au moins dans le cas de charge de l'état de fonctionnement régulier, sachant que les éléments de précontrainte (3) sont de préférence tendus au moyen d'une pince de serrage (39).

17. Procédé selon l'une quelconque des revendications 15 ou 16 précédentes, **caractérisé en ce que**, dans un premier temps, un calibre (44) pour l'installation des dispositifs d'accrochage arrière (7) sur une couche de propreté et/ou dans un coffrage de la fondation (2) est mise en place, puis les dispositifs d'accrochage arrière (7) sont mis en place au moyen du calibre (44) sur la couche de propreté et/ou dans le coffrage, sachant que, de préférence, les dispositifs d'accrochage arrière (7) sont prémontés avec de préférence , respectivement, deux éléments longitudinaux (10) et, respectivement, une plaque d'ancrage inférieure (11) commune et sont mis en place dans le coffrage en tant qu'étendue de prémontage (40).
